# EUROPEAN PATENT SPECIFICATION

(11) **EP 2 641 942 B1**
(45) Date of publication and mention of the grant of the patent: **24.12.2014**
(21) Application number: 13154232.6
(22) Date of filing: 06.02.2013
(51) Int. Cl.: C09D 11/00

(54) **Ink composition, ink set and image forming method**
Tintenzusammensetzung, Tintensatz und Bilderzeugungsverfahren
Composition d'encre, ensemble d'encre et procédé de formation d'image

(30) Priority: 22.03.2012 JP 2012066136
(43) Date of publication of application: 25.09.2013
(73) Proprietor: Fujifilm Corporation, Minato-ku Tokyo (JP)
(72) Inventor: Ikoshi, Masao, Ashigarakami-gun, Kanagawa 258-8577 (JP); Nishimura, Naoko, Ashigarakami-gun, Kanagawa 258-8577 (JP)
(74) Representative: Morpeth, Fraser Forrest

(56) References cited:
- EP-A1- 1 443 085
- US-A1- 2004 242 726
- US-A1- 2009 311 425

## Description

### BACKGROUND OF THE INVENTION

### [Field of the Invention]

The present invention relates to an ink composition, an ink set, and a method of forming an image.

### [Description of the Related Art]

In recent years, with the advancement of inkjet recording technology, an inkjet recording process has come to be used for high precision images for photography and off-set printing, for which high-quality recording is demanded.

With regard to such demands, for the purpose of maintaining the resistance to clogging of nozzles, good print durability, further increases in the recording speed, and reducing the size of jetted liquid droplets, a water-based pigment ink for inkjet recording has been disclosed, the ink including a quinacridone pigment in a state in which it is dispersed in an aqueous medium and having a phosphate ion content of from 90 ppm to 250 ppm and a calcium content of from 1 ppm to 150 ppm, the ink further including a block polymer, which has a carboxylic acid as a solubilizing group, in an amount ranging from 1% by mass to 6% by mass (see, for example, Japanese Patent Application Laid-Open (JP-A) No. 2004-269798).

Further, for the purpose of preventing corrosion of a metal member of an inkjet head or the like, an aqueous ink for inkjet recording has been disclosed, the aqueous ink including a colorant, water, and a water soluble organic solvent, the colorant including a self-dispersible type C. I. Pigment Red 122, the surface of which has been modified with a sulfonic acid group, and the concentration of phosphate ions in the aqueous ink being 20 ppm or less (see, for example, JP-A No. 2011-074198).

Moreover, in order to realize reduced bleeding and high ink coloring properties when recording on plain paper, and to have fixability in addition to sufficient ink coloring properties when recording on special-purpose paper, and further, to obtain jetting stability, an aqueous ink has been disclosed that includes a dispersion in which a colorant is encapsulated with a polymer to make it dispersible in water, in which the polymer has aromatic rings in an amount of from 20% by weight to 70% by weight based on the weight of the polymer (see, for example, International Publication No. (WO) 2003/033602).

### SUMMARY OF INVENTION

According to an aspect of the invention, an ink composition having excellent jetting stability, which contains water, a cross-linked polymer-coated pigment in which at least a portion of a surface of the pigment is covered with a cross-linked polymer, free polymer derived from the polymer before cross-linking that is not bound to the cross-linked polymer-coated pigment, at least one divalent metal ion in an amount of from 30 ppm to 200 ppm with respect to the total mass of the ink composition and wherein the free polymer comprises an anionic group and has an acid value of 95 mgKOH/g or more, an ink set and an image forming method using the same, which are excellent in jetting stability, are provided.

As shown in JP-A No. 2004-269798 and the like, techniques for decreasing the viscosity of ink have been investigated in view of reducing clogging of inkjet nozzles; however, stable jetting properties are also not obtained when the viscosity is too low.

The present invention has the object of providing an ink composition having excellent jetting stability, and the task of the invention is to achieve this object.

Further, the present invention has the object of providing an ink set having excellent jetting stability and an image forming method, and the task of the invention is to achieve this object.

When an ink composition containing a cross-linked polymer-coated pigment, in which a pigment is covered with a cross-linked polymer, is stored, there are cases in which the viscosity of the ink composition decreases with time. Ink compositions having excessively low viscosity are difficult to eject from the ejection ports of inkjet nozzles, as a result of which the jetting stability is likely to be lowered such that the ejection amount (the quantity of a liquid droplet) may vary, or the landing accuracy of liquid droplets ejected onto a paper surface may be lowered.

The present inventors have found that the age-induced lowering of the viscosity of the ink composition is attributed to the existence of a polymer, which is used for preparing a cross-linked polymer-coated pigment, in the ink composition in a state in which the polymer is separated and is not cross-linked and that, in such a case, the lowering of the viscosity of the ink composition can be suppressed when the ink composition contains a specific amount of a divalent metal ion, whereby the present invention has been completed.

Specific means for addressing the above problems are as follows.
<1> An ink composition including: water; a cross-linked polymer-coated pigment in which at least a portion of a surface of the pigment is covered with a cross-linked polymer; free polymer derived from the polymer before cross-linking that is not bound to the cross-linked polymer-coated pigment; at least one divalent metal ion in an amount of from 30 ppm to 200 ppm with respect to a total mass of the ink composition and wherein the free polymer comprises an anionic group and has an acid value of 95 mgKOH/g or more.
<2> The ink composition according to the item <1>, further including a divalent anion in an amount of 40 ppm or less with respect to the total mass of the ink composition.
<3> The ink composition according to any one of the items <1> or <2>, wherein the divalent metal ion is Mg²⁺, Ca²⁺, Zn²⁺, or any mixture thereof.
<4> The ink composition according to any one of the items <1> to <3>, further including at least one water soluble polymerizable compound having at least two polymerizable groups.
<5> The ink composition according to the item <4>, wherein at least one of the at least two polymerizable groups is a group selected from the group consisting of a (meth)acrylamido group, a maleimido group, a vinylsulfono group and an N-vinylamido group.
<6> The ink composition according to the item <4> or the item <5>, wherein a ratio of the molecular weight of the water soluble polymerizable compound to a number of polymerizable groups contained in the water soluble polymerizable compound (molecular weight of the water soluble polymerizable compound/number of polymerizable groups) is 175 or less.
<7> The ink composition according to any one of the items <4> to <6>, wherein the water soluble polymerizable compound further includes at least one nonionic hydrophilic group selected from the group consisting of an oxyalkylene group, an oligomer thereof, and a hydroxyl group.
<8> An ink set including: the ink composition according to any one of the items <1> to <7>; and a treatment liquid including a coagulant component, which causes aggregation of components contained in the ink composition when the coagulant component contacts the ink composition.
<9> An image forming method including: applying the ink composition according to any one of the items <1> to <7> onto a recording medium by an inkjet method.
<10> The image forming method according to the item <9>, further including: applying, onto a recording medium, a treatment liquid including a coagulant component, which causes aggregation of components contained in the ink composition when the coagulant component contacts the ink composition.
<11> The image forming method according to the item <10>, wherein the coagulant component is an acidic compound.
<12> The image forming method according to any one of the items <9> to <11>, wherein the ink composition is discharged through an opening provided on a nozzle plate, the nozzle plate including a liquid repellent film, and the liquid repellent film including a fluorine-containing compound.
<13> The image forming method according to the item <12>, wherein the fluorine-containing compound is fluoroalkylsilane or fluoroalkyl alkoxysilane.

According to the present invention, an ink composition having excellent jetting stability may be provided.

Further, according to the present invention, an ink set having excellent jetting stability and an image forming method may be provided.

### BRIEF DESCRIPTION OF THE DRAWINGS

Fig. 1 is a conceptual sectional view showing an example of the inner structure of a jetting head.
Fig. 2 is a schematic diagram showing an example of an array of ejection ports in a nozzle plate.
Fig. 3 is a schematic configuration diagram showing an example of the structure of an inkjet recording apparatus used for carrying out an image forming method of the present invention.

### DETAILED DESCRIPTION OF THE INVENTION

Hereinafter, an ink composition of the present invention and a method of producing the same, an ink set, and an image forming method are described in detail.

### <Ink Composition>

The ink composition of the present invention (hereinafter, may be merely referred to as "ink") includes water; a cross-linked polymer-coated pigment, which has a structure in which at least a portion of a surface of a pigment is covered with a cross-linked polymer; a separate polymer derived from the polymer before cross-linking that is not bound to the cross-linked polymer-coated pigment; d at least one kind of divalent metal ion in an amount of from 30 ppm to 200 ppm with respect to the total mass of the ink composition and wherein the free polymer comprises an anionic group and has an acid value of 95 mgKOH/g or more. The ink composition of the present invention may further include, as necessary, components such as a water soluble organic solvent or a surfactant.

The configuration described above may facilitate to provide an ink composition of the present invention that exhibits excellent jetting stability.

Hereinafter, the simple term "polymer" indicates a non-crosslinked polymer.

Further, the "separate polymer that is not bound to a cross-linked polymer-coated pigment" may also be referred to as "free polymer".

Recently, there is a tendency to make the concentration of a pigment in an ink composition higher, in order to obtain a high print density when an image is formed by using the ink composition. However, when the amount of solids in an ink composition is large, the viscosity of the ink composition tends to increase. In the case of applying an ink composition to image formation by an inkjet method, the viscosity of the ink composition exerts a remarkable influence on the ejection of the ink composition from inkjet nozzles, and thus, it has been thought that an ink composition having a low viscosity is needed.

Therefore, attempts have been made to obtain a low-viscosity ink composition by using a cross-linked polymer-coated pigment, which has a structure in which at least a portion of a surface of a pigment is covered with a cross-linked polymer, to apply dispersion stability to the ink composition.

However, it becomes clear that the ink composition containing a cross-linked polymer-coated pigment, which is covered with a cross-linked polymer, causes lowering in viscosity with time. Ink compositions used for inkjet recording are originally prepared to have a low viscosity in order to suppress clogging of inkjet nozzles or the like. Therefore, when the viscosity decreases further, the viscosity becomes lower than the viscosity at the time of preparation.

Here, in the inkjet image recording, when the amount of ink per one liquid droplet jetted from an inkjet nozzle is controlled, and dots are formed by jetting at a constant liquid droplet amount, variation in dot diameter of the ink droplets or the like does not occur and, as a result, an image with good accuracy can be formed.

Further, when the ink droplets have a certain degree of viscosity, the ink composition flows smoothly inside the inkjet nozzles, without delay, and when the liquid droplets are jetted from the inkjet nozzles, by being jetted at a constant liquid droplet amount, "jetting deviation", which is a phenomenon in which the flight direction of the liquid droplet deviates, may be suppressed.

When the viscosity of the ink composition becomes lower than the viscosity at the time of preparation of the ink composition, there are cases in which the flight course of the ink droplet is deviated when the ink droplet is jetted from the inkjet nozzle and the ink droplet is not spotted at the targeted position on a recording material, resulting in lowering of the accuracy in the landing position.

Further, when the viscosity of the ink composition becomes lower than the viscosity at the time of preparation of the ink composition, the ink composition is less likely to flow smoothly inside the inkjet nozzles, and therefore, it becomes impossible to form liquid droplets having a specified liquid droplet amount. As a result, variation in the liquid droplet amount of the ink droplets may occur, and thus, variation in dot diameter of the ink droplets or the like may occur, so that it becomes impossible to form an image with good accuracy.
In particular, when continuous ejection of the ink composition is performed at high speed, a phenomenon in which the ink droplet is not ejected may also occur, and thus, there are cases in which image failure such as dot loss is caused.

In contrast, by preparing an ink composition to have the above-described configuration of the ink composition of the present invention, an ink composition in which the viscosity thereof is less likely to decrease, even after aging for a long time such as being stored after preparing the ink composition until shipping the product, and which has excellent jetting stability can be prepared.

The reason for this is not clear, but it is thought as follows.

Namely, the cross-linked polymer-coated pigment, which is covered with a cross-linked polymer and is incorporated in the ink composition, is obtained by dispersing a pigment by using a polymer, and then cross-linking the polymer with a cross-linking agent, but there are cases in which, among polymers, a polymer (non-cross-linked polymer) that does not contribute to the cross-linking reaction remains. The non-cross-linked polymer is separated from the pigment (that is, not bound to a cross-linked polymer-coated pigment) and exists as a free polymer in the ink composition, and it is thought that the molecular structure thereof transforms with the lapse of time. Since the viscosity of the ink composition decreases with time, it is thought that the lowering of the viscosity of the ink composition is caused by the transformation of the free polymer.

When the ink composition including such a cross-linked polymer-coated pigment includes a divalent metal ion in an amount of from 30 ppm to 200 ppm, while the reason is not clear, it is thought that the transformation of the free polymer is inhibited, and therefore, the lowering of the viscosity of the ink composition can be suppressed.

As a result, when the ink composition of the present invention is used, a smooth flow of ink composition inside the inkjet nozzles is realized, and the ink droplet amount can be controlled to a desired amount, and therefore, the jetting deviation can be suppressed when the ink composition is jetted from the nozzles.

Further, since the variation of the ink droplet amount is suppressed, the variation of the dot diameter is suppressed when the ink droplets are spotted onto the recording medium, and accordingly, an image with good accuracy can be formed.

Moreover, even when the ink composition is successively jetted, since the ink composition smoothly flows inside the inkjet nozzle, dot loss is less likely to occur.

As described above, the ink composition of the present invention has excellent jetting stability such as the flow inside the inkjet nozzles or the suppression of jetting deviation.

Further, the ink composition of the invention suppresses the age-induced lowering of the viscosity, and thus, the ink composition of the invention has excellent discharge reliability over a long-term.

Hereinafter, each component included in the ink composition of the invention is described in detail.

### [Divalent metal ion]

The ink composition of the invention includes at least one kind of divalent metal ion.

The kind of the divalent metal ion is not particularly limited, and examples of the divalent metal ion may include Mg²⁺, Zn²⁺, Ca²⁺, Cu²⁺, Fe²⁺, and Ba²⁺.

Among them, from the viewpoint of ionization tendency, Mg²⁺, Ca²⁺, and Zn²⁺ are preferable, and Mg²⁺ and Ca²⁺ are more preferable.

The ink composition may include one kind of the divalent metal ions alone, or may include two or more kinds of them.

The content of the divalent metal ion in the ink composition is from 30 ppm to 200 ppm with respect to the total mass of the ink composition. Here, concerning the expression "the content of the divalent metal ion in the ink composition", in a case in which the ink composition includes only one kind of divalent metal ion, "the content of the divalent metal ion in the ink composition" indicates the content of the one kind of metal ion; and in a case in which the ink composition includes two or more kinds of divalent metal ions, "the content of the divalent metal ion in the ink composition" indicates the total content of the all kinds of metal ions which are included in the ink composition.

When the content of the divalent metal ion is less than 30 ppm, the lowering of the viscosity of the ink composition cannot be suppressed, and jetting stability of the ink composition cannot be obtained. When the content of the divalent metal ion exceeds 200 ppm, the liquid repellent film may be deteriorated when the ink composition is jetted from an ejection port of a nozzle plate which is provided with a liquid repellent film including a fluorine-containing compound. Note that, while the details of the nozzle plate are described below, when an ink composition is applied onto a recording medium by an inkjet method, there are cases in which the ink composition is jetted from an ejection port of a nozzle plate which is provided with a liquid repellent film including a fluorine-containing compound. The liquid repellent film is formed for preventing the inhibition of jetting properties due to adhesion and sticking of the ink composition to an edge of the ejection port or a surface of the nozzle plate where the ejection port exists. Accordingly, when the liquid repellent film is deteriorated due to an excess amount of divalent metal ion in the ink composition, jetting stability cannot be obtained.

The content of the divalent metal ion in the ink composition is preferably from 60 ppm to 160 ppm, and more preferably from 75 ppm to 130 ppm, with respect to the total mass of the ink composition.

An Mg ion (Mg²⁺) or a Ca ion (Ca²⁺) tends to be incorporated in the ink composition as an impurity component derived from the pigment. Accordingly, when an Mg ion or a Ca ion is added, while utilizing the divalent metal ion as the impurity component, such that the content falls within the above numerical range, there is no waste.

The concentration of the divalent metal ion in the ink composition can be measured by ICP-OES (high-frequency inductively coupled plasma optical emission spectrometry).

As the measuring device, a generally used measuring device can be used. For example, quantification may be conducted by using OPTIMA 7300DV (trade name), manufactured by PerkinElmer, Inc.

Further, with regard to the measurement, a sample obtained by extracting an appropriate amount of the ink composition, then adding HNO₃ (nitric acid) thereto, and then subjecting the resulting mixture to microwave ashing (at 230°C) may be used.

In the impurity component derived from the pigment, a divalent anion is also included. Since the divalent anion may make a contribution to the lowering of the viscosity of the ink composition, the divalent anion is to be described.

### (Divalent anion)

Examples of the divalent anion which is possibly involved in the ink composition include those obtained by eliminating proton (H⁺) from a divalent inorganic acid or a divalent organic acid.

Examples of a divalent inorganic acid anion obtained by eliminating two protons from a divalent inorganic acid include a phosphate ion [PO₄²⁻], a sulfate ion [SO₄²⁻], and a carbonate ion [CO₃²⁻].

Examples of a divalent organic acid anion obtained by eliminating two protons from a divalent organic acid include an oxalate ion [(COO)₂²⁻] and a malonate ion [CH₂(COO)₂²⁻].

Among the above divalent anions, the impurity component derived from the pigment is a divalent inorganic acid anion, and particularly, a phosphate ion [PO₄²⁻] or a sulfate ion [SO₄²⁻].

As described above, since divalent anions are components that make a contribution to the lowering of the viscosity of an ink composition, it is preferable that a divalent anion is not contained. However, when the ink composition contains a divalent anion, the content of the divalent anion is preferably 40 ppm or less with respect to the total mass of the ink composition.

When the content of the divalent anion in the ink composition is 40 ppm or less, the age-induced lowering of the viscosity of the ink composition can be further suppressed.

The lower the content of the divalent anion in the ink composition is, the better it is. It is preferable that a divalent anion is not incorporated (0 ppm) in the ink composition, but usually, there is a tendency that a divalent anion remains during the preparation of the ink composition, even though an approach such as sufficiently washing the pigment with water or the like is made.

The concentration of the divalent anion in the ink composition can be measured by anion chromatography capable of detection by using the electronic conductivity (suppressor system), direct photometric detection of determining the ion concentration of a sample from the absorbance, or indirect photometric detection of determining the concentration relating to ion exchange from the absorbance.

As the measuring device, any of generally used measuring devices may be used. Examples thereof include "ICS-2000" (trade name, manufactured by Dionex Corporation), "IC 2010" (trade name, manufactured by TOSOH CORPORATION), and "ICA-2000" (trade name, manufactured by DKK-TOA CORPORATION).

Further, in the measurement of the concentration of the divalent anion, a sample prepared by subjecting the ink composition to ultracentrifugation (for example, at 140,000 rpm, for 60 min), gathering the resulting supernatant liquid, and diluting the supernatant liquid 10 times to 1,000 times with ultrapure water may be used.

There is no particular limitation as to the measurement conditions, and the column to be used, composition of the eluent, flow rate, column temperature, injection amount, and the like may be selected as appropriate.

For example, as the column, "AS18 4 mm", "AS 15 4 mm", and "AS20 4 mm" (all trade names, manufactured by Dionex Corporation), and the like are usable.

The eluent is not particularly limited, and examples thereof include an aqueous solution of potassium hydroxide having a predetermined concentration.

Specific measurement conditions may be, for example, as follows: a flow rate in a range of from 1 mL/min to 2 mL/min; a column temperature of from 38°C to 42°C; and a sample injection amount in a range of from 50 µL to 200 µL.

### [Cross-linked polymer-coated pigment and free polymer]

The ink composition of the present invention includes a cross-linked polymer-coated pigment and a polymer (free polymer) separated from the pigment.

It should be noted that the free polymer is a component which is preferably not included in the ink composition, from the viewpoint of suppressing lowering of the viscosity of the ink composition, but the free polymer is a component which is inevitably included in the ink composition in the preparation of the cross-linked polymer-coated pigment. Therefore, in the present invention, also in a case in which a free polymer is to be included in the ink composition, the ink composition includes the divalent metal ion described above, so as to suppress the lowering of the viscosity of the ink composition.

The cross-linked polymer-coated pigment is a pigment, at least a portion of the surface of which is covered with a cross-linked polymer.

The free polymer refers to all the polymers which are separated from the pigment and can exist in the ink composition, and as described above, the free polymer is derived from a polymer before cross-linking (non-cross-linked polymer), which is used for preparing the cross-linked polymer-coated pigment. Namely, the free polymer refers to the same polymer as a polymer before cross-linking (non-cross-linked polymer) of the cross-linked polymer that covers the pigment, or a polymer derived from the non-cross-linked polymer. The polymer derived from the non-cross-linked polymer includes degradation products of the non-cross-linked polymer, cross-linked products, and the like.

Accordingly, in the present invention, a polymer which remains as an unreacted component at the time of preparation of the cross-linked polymer-coated pigment (at the time of cross-linking reaction) can be used as the free polymer.

### (Polymer)

A cross-linked polymer is a polymer obtained by cross-linking a polymer (non-cross-linked polymer) using a cross-linking agent.

The polymer is not particularly limited, and various polymers may be used. Above all, polyvinyls, polyurethanes, polyesters and the like, which can function as water soluble dispersants, are preferable, and polyvinyls are more preferable.

It is preferable that the polymer is a copolymer obtained by using a carboxyl group-containing monomer as the copolymerization component. Examples of the carboxyl group-containing monomer include (meth)acrylic acid, β-carboxyethyl (meth)acrylate, fumaric acid, itaconic acid, maleic acid, and crotonic acid. Among them, from the viewpoints of cross-linkability of the polymer and dispersion stability, (meth)acrylic acid or β-carboxyethyl (meth)acrylate is preferable. Note that, the term "(meth)acrylic acid" denotes either or both of "acrylic acid" and "methacrylic acid".

In order to be cross-linked by a cross-linking agent, the polymer has a functional group capable of being cross-linked by a cross-linking agent. The functional group capable of being cross-linked is not particularly limited, and examples include a carboxyl group or a salt thereof, an isocyanato group, and an epoxy group. From the viewpoint of improvement in dispersibility, it is preferable that the polymer has a carboxyl group or a salt thereof.

Further, from the viewpoints of the dispersibility and dispersion stability of the pigment, the acid value is preferably from 100 mgKOH/g to 180 mgKOH/g, more preferably from 100 mgKOH/g to 170 mgKOH/g, and particularly preferably from 100 mgKOH/g to 160 mgKOH/g.

The weight average molecular weight (Mw) of the polymer is preferably from 50,000 to 120,000, more preferably from 60,000 to 120,000, even more preferably from 60,000 to 100,000, and particularly preferably from 60,000 to 90,000.

It is preferable that the polymer further has at least one type of hydrophobic monomer as the copolymerization component. Examples of the hydrophobic monomer may include alkyl (meth)acrylates in which the alkyl moiety has from 1 to 20 carbon atoms, (meth)acrylates having an aromatic ring group such as benzyl (meth)acrylate or phenoxyethyl (meth)acrylate, and styrene and derivatives thereof.

The copolymerization form of the polymer is not particularly limited, and the polymer may be a random polymer, a block polymer, or a graft polymer.

The method of synthesizing the polymer is not particularly limited, but random polymerization of vinyl monomers is preferable from the viewpoint of dispersion stability.

The amount of the polymer used is preferably from 10% by mass to 200% by mass, more preferably from 20% by mass to 150% by mass, and particularly preferably from 30% by mass to 100% by mass, with respect to the pigment.

The content of the polymer in the ink composition is preferably such that the total of the content of the polymer that forms the cross-linked polymer and the content of the free polymer is from 10% by mass to 200% by mass, more preferably from 20% by mass to 150% by mass, and particularly preferably from 30% by mass to 100% by mass, with respect to the pigment.

The cross-linking agent is not particularly limited as long as it is a compound having two or more moieties that react with the polymer. In particular, a compound having two or more epoxy groups (an epoxy compound having a functionality of two or more) is preferable, in view of having excellent reactivity with carboxyl groups.

Specific examples thereof include ethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylol propane triglycidyl ether. Among them, polyethylene glycol diglycidyl ether, diethylene glycol diglycidyl ether, and trimethylol propane triglycidyl ether are preferable.

An example of a method of obtaining a cross-linked polymer-coated pigment is a method of dispersing a pigment using a water soluble or water insoluble polymer, and then cross-linking the polymer using a cross-linking agent, to prepare a pigment dispersion.

### (Pigment)

The pigment which constitutes the cross-linked polymer-coated pigment is not particularly limited, and can be selected as appropriate according to the intended use. The pigment may be, for example, an organic pigment or an inorganic pigment.

Examples of the organic pigment include azo pigments, polycyclic pigments, dye chelates, nitro pigments, nitroso pigments, and aniline black. Among them, azo pigments and polycyclic pigments are more preferable. Examples of the azo pigments include azo lakes, insoluble azo pigments, condensed azo pigments, and chelate azo pigments.
Examples of the polycyclic pigment include phthalocyanine pigments, perylene pigments, perinone pigments, anthraquinone pigments, quinacridone pigments, dioxazine pigments, indigo pigments, thio indigo pigments, isoindolinone pigments, and quinophthalone pigments. Examples of the dye chelates include basic dye chelates and acidic dye chelates.

Examples of the inorganic pigment include titanium oxide, iron oxide, calcium carbonate, barium sulfate, aluminium hydroxide, barium yellow, cadmium red, chrome yellow, and carbon black. Among them, carbon black is particularly preferable. The carbon black may be produced by a known method such as a contact method, a furnace method, or a thermal method.

Examples of a black pigment may include carbon blacks exemplified in paragraph [0031] of JP-A No. 2011-231315; however, the invention is not limited thereto.

Examples of the organic pigment may include yellow ink pigments exemplified in paragraph [0032] of JP-A No. 2011-231315, magenta ink pigments exemplified in paragraph [0033] of JP-A No. 2011-231315, and cyan ink pigments exemplified in paragraph [0034] of JP-A No. 2011-231315, but the invention is not limited these examples.

The above pigments may be used alone or in a combination of two or more kinds of pigments selected from any one or more of the groups described above.

From the viewpoints of ink coloring properties, granularity of dispersed pigment particles, ink storage stability, and discharge reliability of ink, the content of the pigment in the ink composition is preferably from 0.1 to 15% by mass, and more preferably from 0.5 to 12% by mass, and particularly preferably from 1 to 10% by mass with respect to the total mass of the ink composition.

### [Water]

The ink composition of the present invention includes water, but the amount of water is not particularly limited. In particular, the content of water is preferably from 10% by mass to 99% by mass, more preferably from 30% by mass to 80% by mass, and even more preferably from 50% by mass to 70% by mass.

### Water soluble Polymerizable Compound

It is preferable that the ink composition of the present invention further includes at least one water soluble polymerizable compound, and specifically, a water soluble polymerizable compound which is polymerized by irradiation with an actinic energy ray.

In particular, in a case in which a treatment liquid containing a coagulant component, which causes aggregation of the components contained in the ink composition when the coagulant component contacts the ink composition, is used at the time of image formation using the ink composition of the present invention, by the use of the water soluble polymerizable compound together with the pigment, the water soluble polymerizable compound may be entrapped between the particles when aggregation is caused by contacting the treatment liquid, and by the subsequent curing through polymerization, the image may be reinforced.

It is preferable that the ink composition of the present invention includes as a component thereof at least one water soluble polymerizable compound that has at least one polymerizable functional group. The ink composition is polymerized by irradiation of an actinic energy ray.

Note that, the term of "water soluble" in the term of "water soluble polymerizable compound" means that the polymerizable compound is dissolved in distilled water at 25°C in an amount of 2% by mass or more. The polymerizable compound is dissolved in distilled water in an amount of preferably 5% by mass or more, more preferably 10% by mass or more, even more preferably 20% by mass or more, and particularly preferably in a manner that the polymerizable compound is uniformly mixed with water at an arbitrary ratio.

The polymerizable functional group in the water soluble polymerizable compound is not particularly limited as long as it is a functional group that polymerizes with an actinic energy ray. Examples of the polymerizable functional group may include: a vinyl group; an allyl group; a (meth)acryl group; and a derivative of these groups. Among them, the polymerizable functional group is preferably at least one selected from the group consisting of a (meth)acryl ester group, a (meth)acrylamido group, a maleimido group, a vinylsulfono group, and an N-vinylamido group, and more preferably a (meth)acrylamido group.

Note that, the term "(meth)acryl" denotes either or both of "acryl" and "methacryl."

The number of the polymerizable functional group contained in the water soluble polymerizable compound is not specifically limited. However, from the viewpoints of adhesion and blocking resistance of an image to be formed, the number of the polymerizable functional group is preferably 2 or more, more preferably 2 to 6, and even more preferably 2 to 3.

When the water soluble polymerizable compound has at least two polymerizable functional groups, they may be the same or different to each other.

From the view points of curing sensitivity and blocking resistance, according to the invention it is preferable to have at least two polymerizable functional groups selected from a group consisting of a (meth)acrylamido group, a maleimido group and a vinylsulfono group. More preferably, it has at least one (meth)acrylamido group and even more preferably it has at least two (meth)acrylamido groups.

The water soluble polymerizable compound preferably has at least one hydrophilic group in addition to the polymerizable functional group. As a hydrophilic group, any one of a nonionic group, an anionic group and a cationic group is available. Further, betaine is also available.

Specific examples of the water soluble polymerizable functional group include an oxyalkylene group and its oligomer, a hydroxyl group, an amido group, a sugar alcohol residue, a urea group, an imino group, an amino group, a carboxyl group, a sulfonic acid group, a phosphoric acid group, a thiol group and a quaternary ammonium group.

From the view points of image adhesion, curing sensitivity and blocking resistance, the hydrophilic group is preferably selected from an oxyalkylene group and its oligomer, a hydroxyl group, an amido group, a sugar alcohol residue, an urea group, an imino group, an amino group, a carboxyl group, a sulfonic acid group, a phosphoric acid group and a thiol group. More preferably, it is at least one selected from an oxyalkylene group and its oligomer and a hydroxyl group. Even more preferably, it is at least one selected from an oxyethylene group, an oxypropylene group and their oligomers (n = 1 to 2) and a hydroxyl group.

When the water soluble polymerizable compound has at least two polymerizable functional groups and also contains a hydrophilic group, bonding pattern between the polymerizable functional group and the hydrophilic group is not specifically limited. However, from the view points of curing sensitivity and blocking resistance, it is preferable to have a pattern in which at least two polymerizable functional groups are bonded via an at least divalent hydrophilic group.

The examples of the at least divalent hydrophilic group include a residue of a compound selected from the following compound group from which at least two of hydrogen atom and/or hydroxyl group are removed.

### - Compound group -

Polyols such as ethylene glycol, diethylene glycol, triethylene glycol, polyethylene glycol, propylene glycol, dipropylene glycol, tripropylene glycol, polypropylene glycol, 1,3-propane diol, 1,2-butanediol, 1,3-butanediol, 1,4-butanediol, 2,3-butanediol, 1,5-pentanediol, 1,4-pentanediol, 2,4-pentanediol, 3-methyl-1,5-pentanediol, 2-methyl-2,4-pentanediol, 1,5-hexanediol, 1,6-hexanediol, 2,5-hexanediol, glycerin, 1,2,4-butane triol, 1,2,6-hexane triol, 1,2,5-pentane triol, thioglycol, trimethylol propane, ditrimethylol propane, trimethylol ethane, ditrimethylol ethane, neopentyl glycol, pentaerythritol, dipentaerythritol and their condensates, low molecular weight polyvinyl alcohol, or sugars, polyamines such as ethylenediamine, diethylenetriamine, triethylenetetramine, polyethyleneimine and polypropylenediamine, unsaturated heterocycles such as pyridine, imidazole, pyrazine, piperidine, piperazine and morpholine.

Further, from the viewpoints of the curing sensitivity and blocking resistance of an image to be formed, the water soluble polymerizable compound has the ratio of the molecular weight to the number of the polymerizable functional groups contained in the water soluble polymerizable compound, i.e., the value obtained by dividing the molecular weight of the water soluble polymerizable compound by the number of the polymerizable functional groups contained per single molecule (molecular weight of the water soluble polymerizable compound/number of the polymerizable functional groups contained, herein below, it may be referred to as "A value"), is preferably 175 or less, and more preferably 165 or less. Further, from the view point of the chemical structure, the A value is preferably 84 or more.

From the view point of the curing sensitivity and blocking resistance, it is preferable that the water soluble polymerizable compound has at least two polymerizable functional groups selected from a group consisting of a (meth)acrylamide group, a maleimide group, a vinylsulfone group and a N-vinylamide group, and has the A value of 84 to 175. It is more preferable that it has at least two polymerizable functional groups selected from a group consisting of a (meth)acrylamide group, a maleimide group, a vinylsulfone group and a N-vinylamide group, and has the A value of 84 to 165. More particularly, it is a compound having at least two (meth)acrylamide groups and the A value of 84 to 165.

Further, it is preferable that the water soluble polymerizable compound described above has at least two polymerizable functional groups selected from a group consisting of a (meth)acrylamide group, a maleimide group, a vinylsulfone group and a N-vinylamide group and a nonionic hydrophilic group, and has the A value of 84 to 175. It is more preferable that it has at least two polymerizable functional groups selected from a group consisting of a (meth)acrylamide group, a maleimide group, a vinylsulfone group and a N-vinylamide group, at least one nonionic hydrophilic group selected from an oxyalkylene group, its oligomer and a hydroxyl group, and has the A value of 84 to 165. It is particularly more preferable that it has at least two (meth)acrylamide groups, at least one nonionic hydrophilic group selected from an oxyalkylene group, its oligomer and a hydroxyl group, and has the A value of 84 to 165.

Herein below, specific examples of the water soluble polymerizable compound of the invention are described, but the invention is not limited thereto.

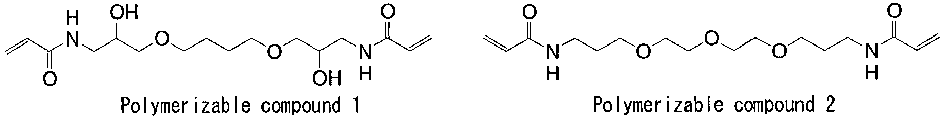

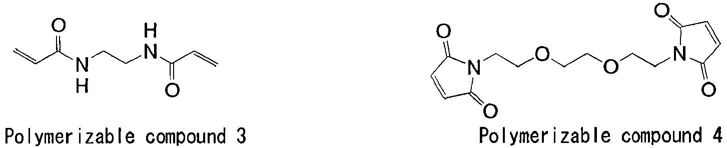

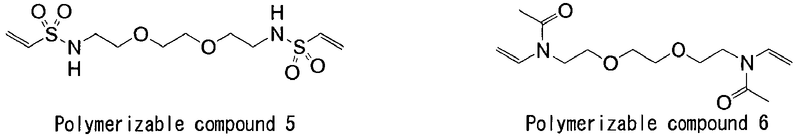

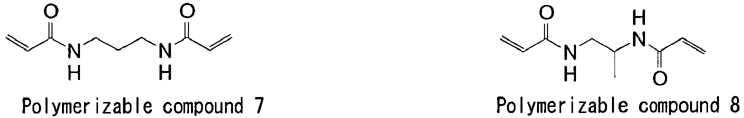

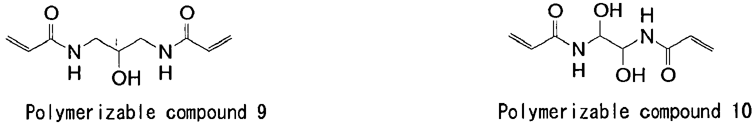

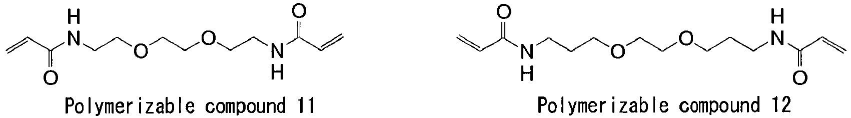

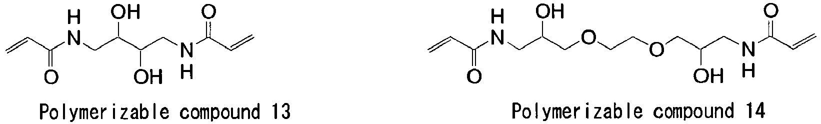

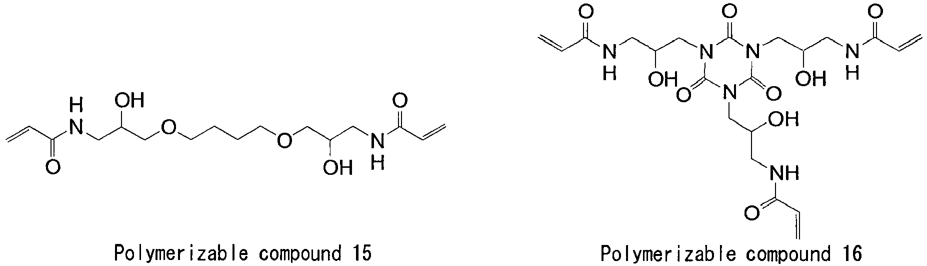

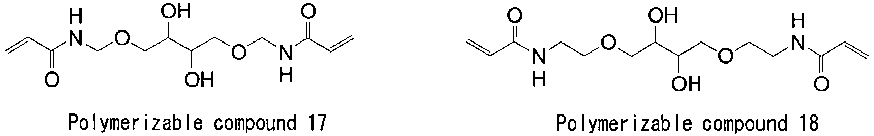

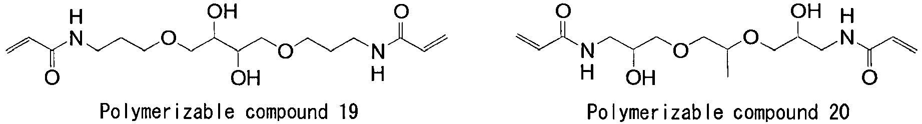

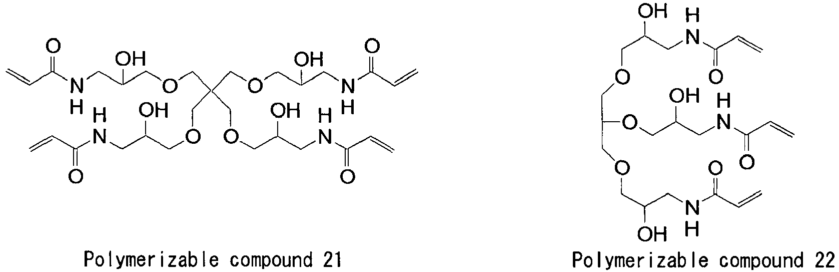

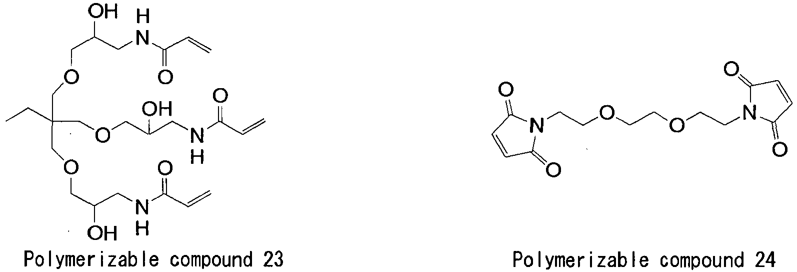

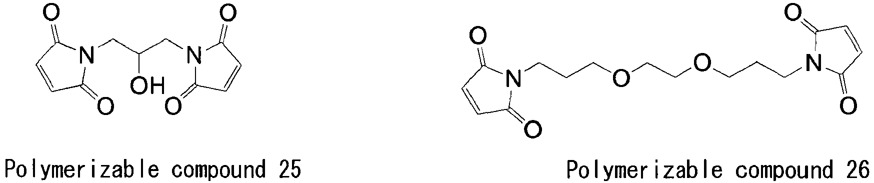

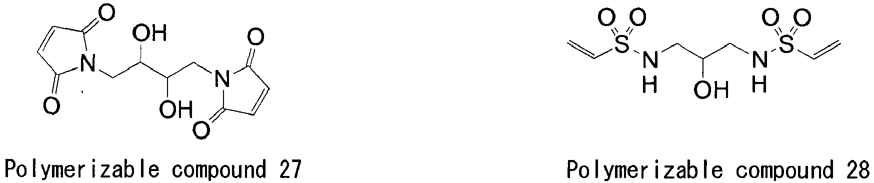

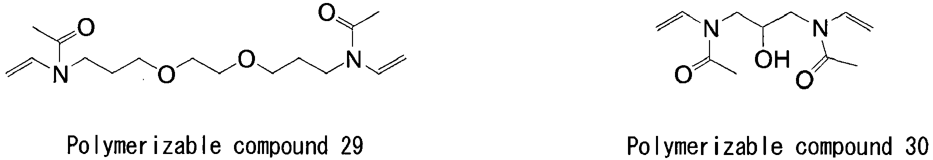

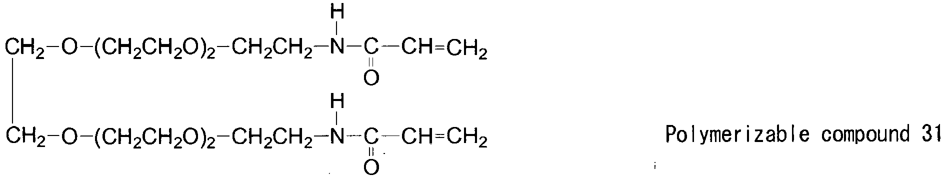

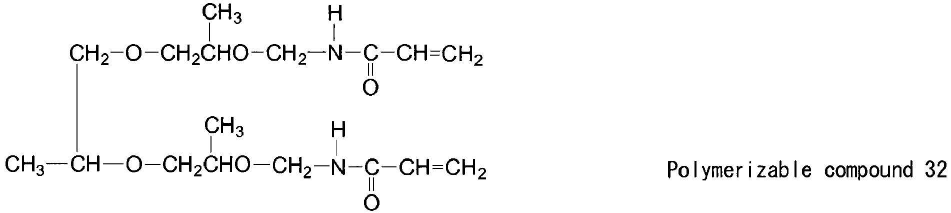

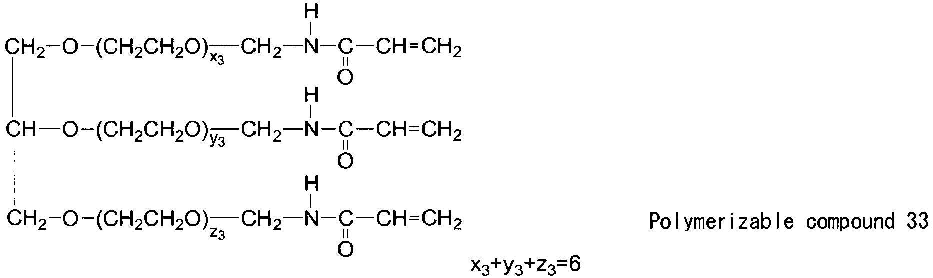

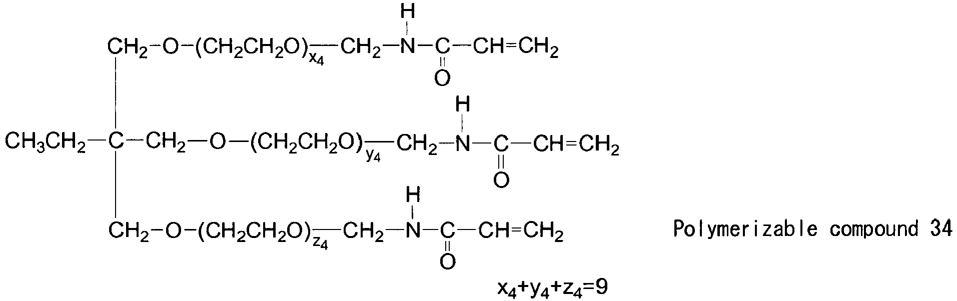

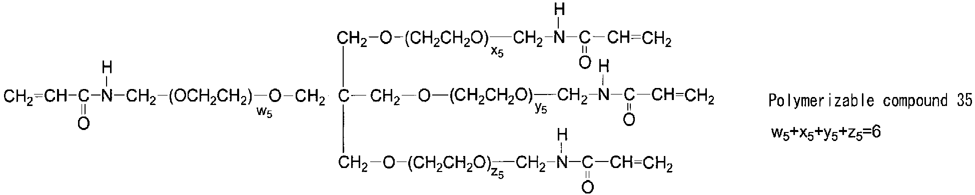

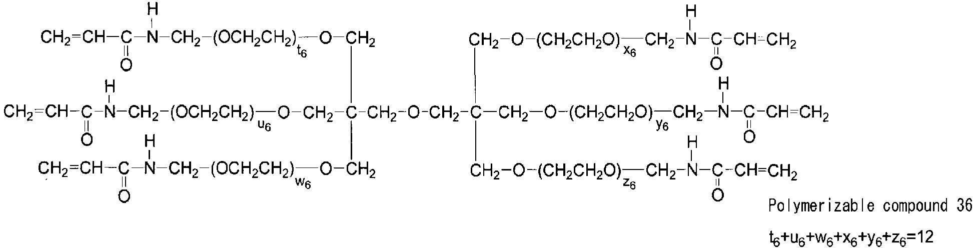

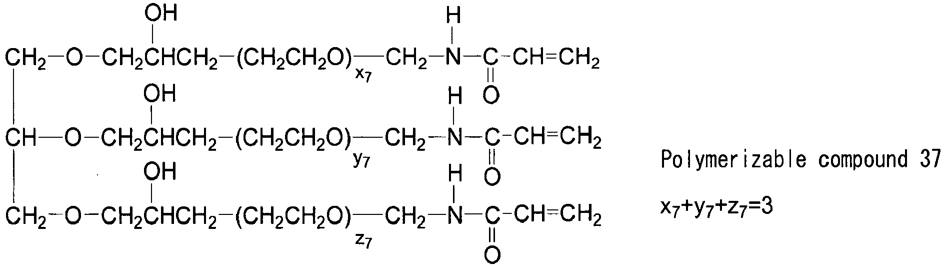

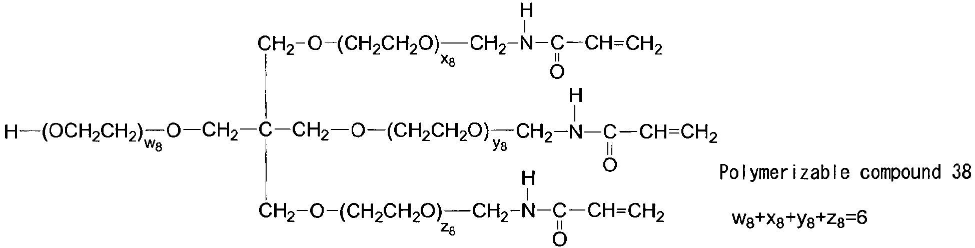

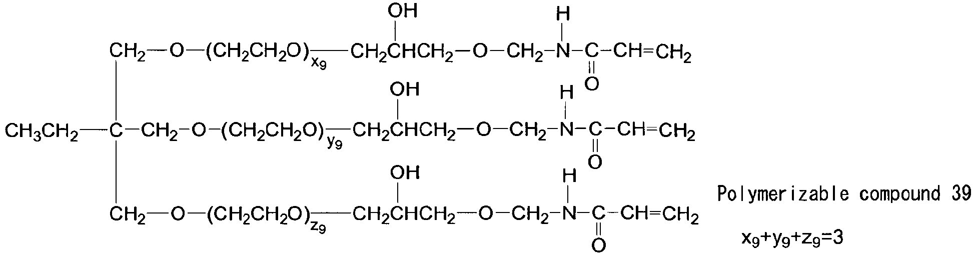

As for the water soluble polymerizable compound, the following water soluble polymerizable compounds may be also suitably used in addition to the water soluble polymerizable compounds described in the above.

Examples of the nonionic polymerizable monomer include a polymerizable compound like (meth)acryl monomer. Examples of the (meth)acryl monomer include a UV curing type monomer and oligomer like (meth)acrylate ester of polyhydric alcohol, (meth)acrylate ester of glycidyl ether of polyhydric alcohol, (meth)acrylate ester of polyethylene glycol, (meth)acrylate ester of ethylene oxide adduct of polyhydric alcohol and a reactant between polybasic acid anhydride and (meth)acrylate ester containing hydroxy group.

The polyhydric alcohol may have internal chain extension with an ethylene oxide chain according to addition of ethylene oxide.

Herein below, specific examples of the nonionic polymerizable compound (the nonionic polymerizable compound 1 to 6) are described. However, the invention is not limited thereto.

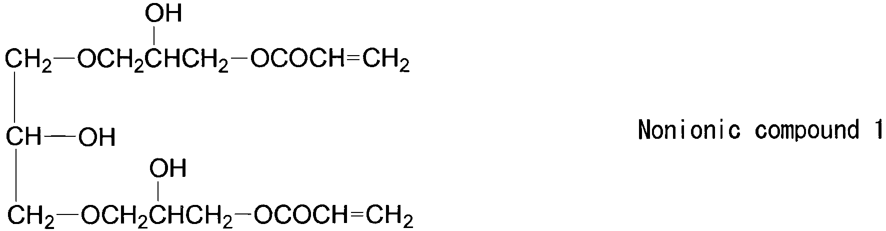

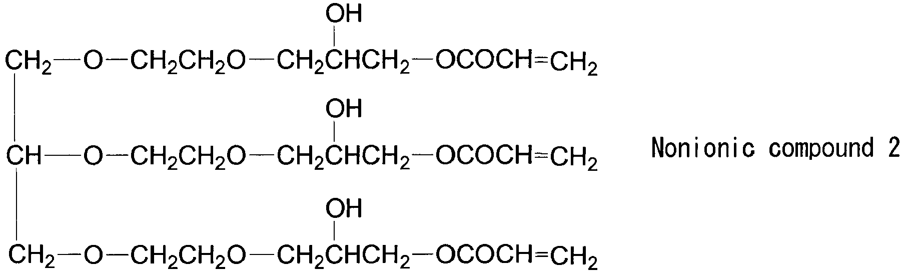

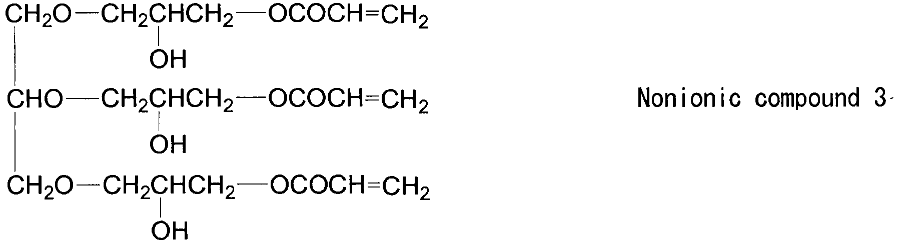

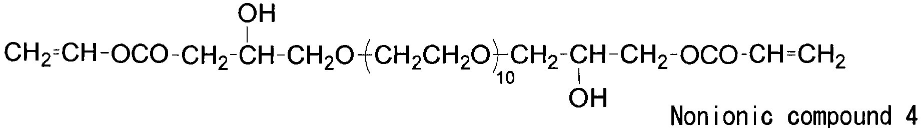

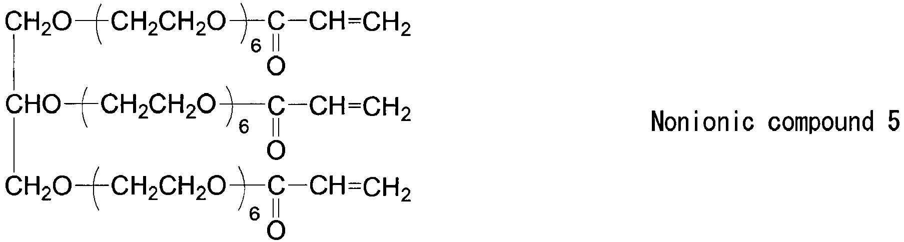

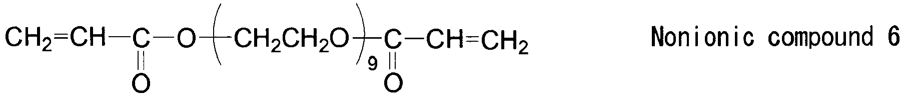

Further, an acrylic acid ester having at least two acryloyl groups in one molecule derived from a polyhydroxy compound may be also used. Examples of the polyhydroxy compound include a condensate of glycols, oligoether of glycols and oligoesters of glycols.

Further, suitable examples of the nonionic polymerizable compound include (meth)acrylic acid esters of polyols having at least two hydroxy groups like monosaccharides or disaccharides and; (meth)acrylic esters with triethanolamine, diethanolamine, trishydroxyaminomethane or trishydroxyaminomethane.

In order to improve scratch resistance, the nonionic polymerizable monomer is preferably a bifunctional or more functional monomer, and more preferably a bifunctional to hexafunctional monomer. In order to achieve solubility and scratch resistance, the polymerizable monomer is preferably a bifunctional to tetrafunctional monomer.

The water soluble polymerizable compound (including the nonionic polymerizable compound) may be used alone or in combination of two or more thereof.

The content of the water soluble polymerizable compound in the ink composition is preferably from 4% by mass to 30% by mass, and more preferably from 10% by mass to 22% by mass.

The content of the water soluble polymerizable compound with reference to the solid content of the pigment is preferably pigment : water soluble polymerizable compound = 1:1 to 1:30, and more preferably 1:3 to 1:15. When the ratio of the water soluble polymerizable compound content to the pigment content is 1 or more, the image strength is further improved and the image has high scratch resistance, and when the ratio is 30 or less, an advantageous pile height is achieved.

### Initiator

When the ink composition in the present invention includes a water soluble polymerizable compound, the ink composition includes therein at least one initiator (hereinafter, also referred to as polymerization initiator) that initiates polymerization of the water soluble polymerizable compound with an actinic energy ray. The initiator may be used each kind singly, as a mixture of two or more kinds, or in a combination with a sensitizer.

As the polymerization initiator, known polymerization initiators may be used without any particular limitation. As the polymerization initiator in the present invention, a photo-polymerization initiator is preferably used.

Examples of a preferred photo-polymerization initiator include: (a) aromatic ketones; (b) acyl phosphine compounds; (c) aromatic onium salt compounds; (d) organic peroxides; (e) thio compounds; (f) hexa-aryl bi-imidazole compounds; (g) ketoxime ester compounds; (h) borate compounds; (i) azinium compounds; (j) methallocene compounds; (k) active ester compounds; (1) compounds having a carbon-halogen bond; and (m) alkylamine compounds.

Specific examples of the polymerization initiator may include polymerization initiators as described in page 65 to 148 of "SHIGAISEN KOKA SYSTEM" by Kiyoshi Kato (published by SOGO GIJYUTSU CENTER KK, 1989).

As the polymerization initiator, either one may be used, a water insoluble initiator that is dispersed in water or a water soluble initiator. A water soluble polymerization initiator is preferable. Note that, the term "water soluble" used in the polymerization initiator means that the initiator is dissolved in distilled water at 25°C in an amount of 0.5% by mass or more. The water soluble polymerization initiator is preferably dissolved in distilled water at 25°C in an amount of 1% by mass or more and more preferably 3% by mass or more.

When the ink composition in the present invention includes an initiator, the content of the initiator in the ink composition may be from 1% by mass to 40% by mass, and more preferably from 5% by mass to 30% by mass, with respect to the amount of the water soluble polymerizable compound. When the content of the initiator is 1 % by mass or more, the abrasion resistance of an image is further improved, which is preferable in high-speed recording. A content of the initiator of 40 % by mass or less is preferable in terms of jetting stability.

Examples of the sensitizer include an amine-containing compound such as an aliphatic amine, an amine having an aromatic group, or piperidine; a urea such as an allyl-containing urea or o-tolylthiourea; a sulfur-containing compound such as sodium diethyldithiophosphate or a soluble salt of an aromatic sulfinic acid; a nitrile-containing compound such as N,N-disubstituted p-aminobenzonitrile; a phosphorus-containing compound such as tri-n-butylphosphine or sodium diethyl dithiophosphate; a nitrogen-containing compound such as Michler's ketone, a N-nitrosohydroxylamine derivative, an oxazolidine compound, a tetrahydro-1,3-oxazine compound, or a condensate of a diamine with formaldehyde or acetoaldehyde; a chlorine-containing compound such as carbon tetrachloride or hexachloroethane; a high-molecular-weight amine that is a reaction product of an epoxy resin and an amine; and triethanolamine triacrylate.

The sensitizer may be contained so far as the effects of the present invention are not impaired.

### Water soluble organic solvent

The ink composition in the present invention may include at least one kind of water soluble organic solvent. By including the water soluble organic solvent, effects of drying prevention, moistening, promoting penetration or the like may be obtained. In order to prevent drying, the solvent may be used as a anti-drying agent for preventing nozzle clogging due to aggregation of ink that has attached and dried at an ejection port of an inkjet nozzle. In terms of drying prevention or moistening, a water soluble organic solvent having a lower vapor pressure than that of water is preferably used. In terms of promoting penetration, the solvent may be used as a penetration promoter for improving the penetration ability of ink into a recording medium.

As an anti-drying agent, the water soluble organic solvent preferably has a lower vapor pressure than that of water. Examples of such a solvent include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin and trimethylol propane; lower alkyl ethers of polyhydric alcohols, such as ethylene glycol monomethyl ether, ethylene glycol monoethyl ether, diethylene glycol monomethyl ether, diethylene glycol monoethyl ether, triethylene glycol monoethyl ether and triethylene glycol monobutyl ether; heterocyclic compounds such as 2-pyrrolidone, N-methyl-2-pyrrolidone, 1,3-dimethyl-2-imidazolidinone and N-ethyl morpholine; sulfur-containing compounds such as sulfolane, dimethyl sulfoxide and 3-sulfolene; polyfunctional compounds such as diacetone alcohol and diethanol amime; and urea derivatives.

Among these, polyhydric alcohols such as glycerin and diethylene glycol are preferable as anti-drying agents.

The anti-drying agent may be used singly or in combination of two or more thereof. The content of anti-drying agent in the ink composition is preferably from 10 to 50 mass%.

As the penetration promoter, the water soluble organic solvent is favorably used in order to promote the penetration of ink composition into a recording medium (such as printing paper). Examples of such a solvent include alcohols such as ethanol, isopropanol, butanol, diethylene glycol monobutyl ether, triethylene glycol monobutyl ether and 1,2-hexanediol, sodium lauryl sulfate, sodium oleate, and nonionic surfactants.

The penetration promoter may be used singly or in combination of two or more thereof. The content of penetration promoter in the ink composition is preferably from 5 to 30 mass%. The penetration promoter is used preferably at an amount in a range in which image bleeding or print through is not caused.

In addition to the above, a water soluble organic solvent is also used for adjusting the viscosity of the ink composition.

Examples of the water soluble organic solvent which can be used for adjusting the viscosity may include water soluble organic solvents exemplified in paragraph [0069] of JP-A No. 2011-231315; however, the invention is not limited thereto.

The water soluble organic solvent may be used singly or in combination of two or more thereof.

### Other additives

The ink composition in the present invention may further include other additives than the aforementioned components, such as known additives including an anti-drying agent (moistener) other than the water soluble organic solvent described above, an anti-fading agent, an emulsion stabilizer, a penetration enhancing agent, a UV absorber, an antiseptic agent, an mildew-proofing agent, a pH adjuster, a surface-tension controller, an antifoam agent, a viscosity adjuster, a dispersant other than the polymer described above, a dispersion stabilizer, an antirust agent and a chelating agent. When these additives are added to the ink composition, they are usually directly added to the ink composition.

The use of the UV absorber may improve the storability of an image, and examples of the UV absorber include: benzotriazole compounds such as those described in JP-A Nos. 58-185677, 61-190537, 2-782, 5-197075 and 9-34057; benzophenone compounds such as those described in JP-A Nos. 46-2784, and 5-194483 and US Patent No. 3,214,463; cinnamic compounds such as those described in Japanese Patent Nos. 48-30492, and 56-21141 and JP-ANo. 10-88106; triazine compounds such as those described in JP-ANo. 4-298503, 8-53427, 8-239368, 10-182621 and Japanese Patent Application National phase Publication No. 8-501291; compounds described in Research Disclosure No. 24239; and so-called fluorescent brighteners that emit fluorescent light upon absorption of UV rays, such as stilbene compounds and benzoxazole compounds.

The anti-fading agent may be used for improving the storability of an image, and examples thereof include an organic anti-fading agent and a metal complex anti-fading agent. Examples of the organic anti-fading agent include hydroquinones, alkoxyphenols, dialkoxyphenols, phenols, anilines, amines, indanes, chromanes, alkoxyanilines and heterocyclic compounds. Examples of the metal complex anti-fading agent include nickel complexes and zinc complexes. More specifically, examples of usable antifading agents include those described in the patents cited in Research Disclosure No. 17643, Section VII, Items I to J; Research Disclosure No. 15162; No. 18716, page 650, left column; Research Disclosure No. 36544, page 527; No. 307105, page 872; Research Disclosure No. 15162; and compounds within the scope of the chemical formulae and examples of representative compounds described in pages 127 to 137 of JP-A No. 62-215272.

Examples of the mildew-proofing agents include sodium dehydroacetate, sodium benzoate, sodium pyridinethion-1-oxide, ethyl p-hydroxybenzoate, 1,2-benzoisothiazolin-3-one, and salts thereof. The content of the mildew-proofing agent is preferably from 0.02 to 1.00 mass% with respect to the ink composition.

Examples of the pH adjuster include a neutralizer such as an organic base or an inorganic alkali. The pH adjuster may improve the storability of the ink composition. The pH adjuster is preferably added at such an amount that the pH of the ink composition becomes from 6 to 10, more preferably from 7 to 10.

Example of the surface-tension controller include nonionic surfactants, cationic surfactants, anionic surfactants, and betaine surfactants.

The surface-tension controller is preferably added in such an amount that the surface tension of the ink composition is from 20 to 60 mN/m, more preferably from 20 to 45 mN/m, and further preferably from 25 to 40 mN/m. When the surface-tension controller is added in an amount in the above range, the ink composition may be spotted in a favorable manner using an inkjet method.

Specific examples of the surfactant as a hydrocarbon type preferably include anionic surfactants such as fatty acid salts, alkyl sulfuric acid ester salts, alkyl benzenesulfonates, alkyl naphthalenesulfonates, dialkyl sulfosuccinates, alkyl phosphoric acid ester salts, naphthalenesulfonic acid-formalin condensates and polyoxyethylene alkyl sulfuric acid salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester and oxyethylene oxypropylene block copolymer. SURFYNOLS (trade name, products of Air Products & Chemicals) which are an acetylene type polyoxyethylene oxide surfactant) are preferably used. Furthermore, amine oxide type amphoteric surfactants such as N, N-dimethyl-N-alkyl amine oxide are preferred.

Additionally, materials described on pages (37) to (38) of JP-A No. 59-157636 and Research Disclosure No. 308119 (1989) as surfactants can be used.

When fluorocarbon (alkyl fluoride type) surfactants, silicone surfactants or the like, such as those described in JP-A Nos. 2003-322926, 2004-325707 and 2004-309806 are used, abrasion resistance can be improved.

The aforementioned surface-tension controller may also be used as an antifoam agent, and fluorine compounds, silicone compounds, chelate compounds such as EDTA are also applicable.

### <Method of Producing Ink Composition>

The method of producing the ink composition of the present invention is not particularly limited as long as it is a technique capable of producing an ink composition that includes water; a cross-linked polymer-coated pigment, which has a structure in which at least a portion of a surface of a pigment is covered with a cross-linked polymer; free polymer derived from the polymer before cross-linking; at least one kind of divalent metal ion in an amount of from 30 ppm to 200 ppm with respect to the total mass of the ink composition and wherein the free polymer comprises an anionic group and has an acid value of 95 mgKOH/g or more.

For example, the ink composition of the present invention can be produced by a method of producing an ink composition, the method including a pigment dispersion step of dispersing a pigment using a water soluble polymer, and then cross-linking the polymer using a cross-linking agent, to cover at least a portion of the surface of the pigment with the cross-linked polymer, thereby preparing a pigment dispersion; and a metal ion addition step of further adding at least one kind of divalent metal ion to the obtained pigment dispersion such that the concentration of the divalent metal ion in the ink composition is from 30 ppm to 200 ppm.

Note that, the addition of the divalent metal ion to the pigment dispersion can be conducted by adding a water soluble compound containing a divalent metal to the pigment dispersion.

Examples of the water soluble compound containing a divalent metal include hydroxides [Mg(OH)₂ or Ca(OH)₂] and chlorides [MgCl₂ or CaCl₂].

The method of producing the ink composition may include other steps, as necessary.

For example, the method may further include, after the pigment dispersion step, a polymerizable compound mixing step of mixing a water soluble polymerizable compound and a polymerization initiator with the pigment dispersion.

In each of the steps included in the method of producing the ink composition, in addition to the components in each step, the above-described "other additives" may also be added, as necessary.

Mixing of the respective components may be carried out by using a known disperser or the like.

With the configuration described above, a method of producing an ink composition that has excellent jetting stability can be provided.

The details of the divalent metal ion, pigment, polymer, cross-linking agent, and the like, which are used in the pigment dispersion step, are the same as the divalent metal ion, pigment, polymer, cross-linking agent, and the like, which are included in the ink composition of the present invention, and their preferable examples are also the same.

### Ink set

The ink set in the present invention includes as components thereof the ink composition of the present invention described above and a treatment liquid that contains a coagulant component aggregating the ingredients of the ink composition when the coagulant component contacts the ink composition.

By using the ink composition in combination with the treatment liquid, the ink set in the present invention allows high-speed image forming (inkjet recording) by an inkjet method, whereby an excellent image with picture qualities of high optical density and high definition (for example, high reproducibility of fine lines and fine portions of image) may be attained even when the image is recorded at high speed.

### Treatment Liquid

The treatment liquid includes as a component thereof at least a coagulant that aggregates the ingredients (specifically pigment) of the ink composition. Aggregation of the pigment that has been dispersed stably in the ink composition is promoted due to mixing of the treatment liquid with ink composition that has ejected onto a recording medium by an inkjet method.

Examples of the coagulant component include a compound that can change the pH value of the ink composition, such as an acidic compound and the like, a polyvalent metal salt, and a polymer having a quaternary amine or a tertiary amine such as polyallylamines. In the present invention, the coagulant preferably includes at least one selected from the group constituting of an acidic compound a polyvalent metal salt, and a polymer having a quaternary amine or a tertiary amine such as polyallylamines. The coagulant more preferably includes an acidic compound.

Preferable examples of the acidic compound include sulfuric acid, hydrochloric acid, nitric acid, phosphoric acid, polyacrylic acid, acetic acid, glycoric acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrole carboxylic acid, furan carboxylic acid, pyridine carboxylic acid, coumalic acid, thiophene carboxylic acid, nicotinic acid, or derivatives of such compound or salts thereof. One of these acidic compounds may be used alone or two or more thereof may be used together.

In the present invention, when the treatment liquid includes an acidic compound, the pH value of the treatment liquid at 25°C is preferably 6 or less, and more preferably 4 or less. In particular, the pH value of the treatment liquid at 25°C is preferably from 1 to 4, and particularly preferably from 1 to 3. In such a case, the pH value of the ink composition at 25°C is preferably 7.5 or more, and more preferably 8.0 or more.

In particular, it is preferable that the pH value of the ink composition at 25°C is 8.0 or more and the pH value of the treatment liquid at 25°C is from 0.5 to 4, from the viewpoint of image density, resolution, and higher-speed image forming.

Among them, the acidic compound is preferably an acidic compound having high solubility with respect to water, more preferably a phosphoric acid or an organic acid, even more preferably an organic acid, even more preferably a dibasic or higher-basic organic acid, and particularly preferably a divalent or trivalent acidic compound from the viewpoints of increasing coagulation properties and immobilizing the entire ink. The dibasic or higher-basic organic acid is preferably an organic acid having a first pKa of 3.5 or less, and more preferably an organic acid having a first pKa of 3.0 or less. Examples thereof include oxalic acid, malonic acid, and citric acid.

Examples of the polyvalent metal salt and a polyallyl amine include salts of alkaline earth metals belonging to group 2 of the periodic table (for example, magnesium and calcium), salts of a transition metal belonging to group 3 of the periodic table (for example, lanthanum), salts of a cation of a metal belonging to group 13 of the periodic table (for example, aluminum), salts of a lanthanide (for example, neodium). As the metal salts, carboxylic acid salts (such as, salts of formic acid, salts of acetic acid, and salts of benzoic acid), nitric acid salts, chlorides, and thiocyanic acid salts are preferred, and calcium salts or magnesium salt of a carboxylic acid (such as salts of formic acid, salts of acetic acid, and salts of benzoic acid), calcium salt of nitric acid or magnesium salt of nitric acid, calcium chloride, magnesium chloride, and calcium salt of thiocyanic acid or magnesium salt of thiocyanic acid are more preferred.

The coagulant component may be used singly, or in combination of two or more thereof.

The content of the coagulant component, which coagulates the ink composition, in the treatment liquid is preferably from 1% by mass to 50% by mass, more preferably from 3% by mass to 45 % by mass, and still more preferably from 5% by mass to 40 % by mass.

The treatment liquid may include other additives as additional components, as long as the effects of the present invention are not impaired. Examples of other additives include known additives, such as an anti-drying agent (moistening agent), an anti-fading agent, an emulsion stabilizer, a penetration enhancing agent, a UV absorber, an antiseptic agent, an mildew-proofing agent, a pH adjuster, a surface-tension controller, an antifoam agent, a viscosity adjuster, a dispersant, a dispersion stabilizer, an antirust agent, and a chelating agent.

From the viewpoint of the coagulation speed of the ink composition, the viscosity of the treatment liquid is preferably from 1 mPa·s to 30 mPa·s, more preferably from 1 mPa·s to 20 mPa·s, even more preferably from 2 mPa·s to 15 mPa·s, and particularly preferably from 2 mPa·s to 10 mPa·s.

The viscosity of the treatment liquid is measured using VISCOMETER TV-22 (trade name, manufactured by TOKI SANGYO CO., LTD.) under the condition of 25°C.

From the viewpoint of the coagulation speed of the ink composition, the surface tension of the treatment liquid is preferably from 20 mN/m to 60 mN/m, more preferably from 25 mN/m to 50 mN/m, and even more preferably from 30 mN/m to 45 mN/m.

The surface tension of the treatment liquid is measured using AUTOMATIC SURFACE TENSIOMETER CBVP-Z (trade name, manufactured by Kyowa Interface Science Co., Ltd.) under the condition of 25°C.

In the ink set of the present invention, a preferable combination of the ink composition of the present invention and the above-described treatment liquid is a combination of the preferable embodiment of the ink composition of the present invention and the preferable embodiment of the treatment liquid described above.

### <Image Forming Method>

The image forming method of the present invention includes an ink applying step of applying the above-described ink composition of the present invention onto a recording medium by an inkjet method.

The image forming method of the present invention may further include a treatment liquid applying step of applying, onto the recording medium, a treatment liquid containing a coagulant component which causes aggregation of the components (specifically, pigment) contained in the ink composition when the coagulant component contacts the ink composition.

The image forming method of the present invention may further include other steps, as necessary.

As described above, the ink composition of the present invention can suppress the lowering of the viscosity. Accordingly, the ink composition flows smoothly inside the inkjet nozzles and can be ejected at a desired liquid droplet amount and therefore, jetting deviation may be suppressed and thus, a high accuracy in the landing position of ink droplets may be attained. Further, variation in the liquid droplet amount of the ejected ink droplets is less likely to occur, and dot loss caused by non-ejection of liquid droplets can be suppressed.

In the image forming method of the present invention, since image formation is performed by using the ink composition of the present invention, jetting stability is excellent as described above.

Further, since the image forming method of the present invention uses the ink set of the present invention, and by applying, onto the recording medium, a treatment liquid containing a coagulant component which causes aggregation of the components (specifically, pigment) contained in the ink composition when the coagulant component contacts the ink composition, an excellent image with picture qualities of high optical density and high resolution (for example, high reproducibility of fine lines and fine portions) may be obtained, even when the image is formed at high speed.

Hereinafter, the respective steps of the image forming method of the present invention are described.

### [Ink applying step]

In the ink applying step, an ink composition including water, a cross-linked polymer-coated pigment which has a structure in which at least a portion of a surface of a pigment is covered with a cross-linked polymer, a free polymer, and at least one kind of divalent metal ion in an amount of from 30 ppm to 200 ppm with respect to the total mass of the ink composition is applied onto a recording medium by an inkjet method.

In this step, the ink composition can be selectively applied onto the recording medium, so that a desired visible image can be formed. Note that, the ink composition may further include a water soluble polymerizable compound. The details of the ink composition, such as the details and preferred embodiments of the respective components capable of being contained in the ink composition, are as described above.

Image forming utilizing the inkjet method can be performed, specifically, by supplying energy thereby ejecting an ink composition to a desired recording medium, that is, plain paper, resin-coated paper, paper used exclusively for inkjet recording described, for example, in JP-ANos. 8-169172, 8-27693, 2-276670, 7-276789, 9-323475, 62-238783, 10-153989, 10-217473, 10-235995, 10-217597, and 10-337947, films, common use paper for electrophotography, clothes, glass, metals, ceramics, etc. As the inkjet recording method suitable to exemplary embodiments of the invention, a method described in JP-A No. 2003-306623, in columns (0093) to (0105) may be applicable.

The inkjet method is not particularly limited and may be of any known system, for example, a charge control system of ejecting an ink utilizing an electrostatic attraction force, a drop on demand system of utilizing a vibration pressure of a piezo element (pressure pulse system), an acoustic inkjet system of converting electric signals into acoustic beams, irradiating them to an ink, and ejecting the ink utilizing a radiation pressure, and a thermal inkjet system of heating an ink to form bubbles and utilizing the resultant pressure (BUBBLEJET (registered trade mark)). Examples of the inkjet method include a system of injecting a number of ink droplets of low concentration, a so-called "photo-ink" each in a small volume, a system of improving an image quality using plural inks of a substantially identical hue and of different concentrations, and a system of using a colorless transparent ink.

The inkjet head used in the inkjet method may be either an on-demand system or a continuous system. The ejection system includes, specifically, for example, an electric-mechanical conversion system (for example, single cavity type, double cavity type, bender type, piston type, share mode type, and shared wall type, etc.), an electric-thermal conversion system (for example, thermal inkjet type, BUBBLEJET (registered trade mark) type, etc.), an electrostatic attraction system (for example, electric field control type, and slit jet type, etc.), and an electric ejecting system (for example, spark jet type, etc.) and any of the ejection systems may be used.

Ink nozzles, etc. used for recording by the inkjet method are not particularly limited but can be selected properly depending on the purpose.

Specific examples of the inkjet method include those described below.
(1) A method called electrostatic attraction system, in which a strong electric field is applied between a nozzle and an accelerating electrode disposed in front of the nozzle so as to successively jet ink droplets from the nozzle, print information signals are supplied to deflection electrodes while the ink droplets pass a gap between the deflection electrodes so that the ink droplets are jetted towards a recording medium, and the ink is fixed on the recording medium to record an image, or in which ink droplets are jetted from a nozzle towards a recording medium, without being deflected, according to print information signals and an image is thereby fixed on the recording medium.
(2) A method in which a pressure is applied to an ink liquid by a small-sized pump and an inkjet nozzle is mechanically vibrated using a crystal oscillator or the like, thereby forcibly jetting ink droplets from the nozzle. The ink droplets jetted from the nozzle is electrically charged simultaneously with the jetting, and print information signals are supplied to deflection electrodes while the ink droplets pass a gap between the deflection electrodes so as to jet the ink droplets towards a recording medium, and an image is thereby recorded on the recording medium.
(3) A piezo method in which pressure and print information signal are simultaneously applied to an ink liquid by a piezoelectric device, so that ink droplets are jetted from a nozzle towards a recording medium and an image is thereby recorded on the recording medium.
(4) A BUBBLE-JET (registered trademark) method, in which an ink liquid is heated and bubbled by a microelectrode according to print signal information, and the bubbles are allowed to expand so that the ink liquid is jetted from a nozzle towards a recording medium and an image is thereby recorded on the image recording medium.

Examples of the inkjet head include an inkjet head of a shuttle system in which a short serial head is used and recording is performed while allowing the head to scan in the across-the width direction of a recording medium, and an inkjet head of a line system in which a line head in which recording elements are arranged corresponding to the entire region for one side of a recording medium is used. In the line system, an image can be recorded over the entire surface of the recording medium by allowing the recording medium to be scanned in the direction being perpendicular to the direction of aligning the recording elements, in which a transportation system such as a carriage by which the short head moves for scanning is not necessary. Further, since complicated scanning control for the movement of the carriage and the recording medium is not necessary and only the recording medium is moved, higher recording speed can be attained as compared with the shuttle system. While the image forming method in exemplary embodiments of the invention is applicable to any one of them, the effect of improving the ejection accuracy and the abrasion resistance of the image is generally remarkable when the inkjet recording method is applied to the line system without performing dummy jetting.

Moreover, the line system also includes a method of using a nozzle plate, in which a raw of line head groups in which recording elements are arranged, are lined up in plural lines in a direction perpendicular to the raw.

The ink composition of the present invention is preferably applied to the inkjet heads of any system, but particularly, in a case in which a nozzle plate capable of realizing image formation at high speed is used, the effect of improving jetting stability becomes greater.

### (Nozzle plate)

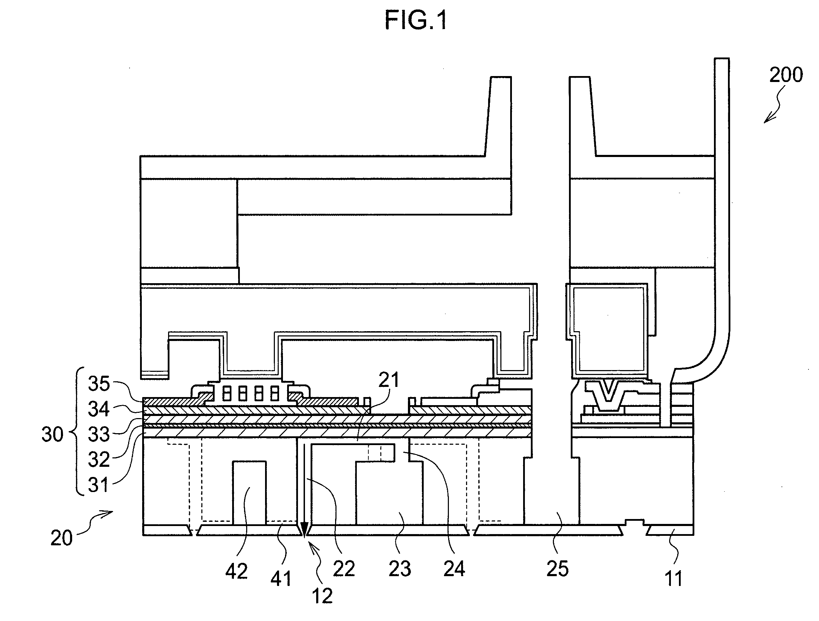

The jetting head used in the plate system is equipped with a nozzle plate having at least a portion thereof provided with a liquid repellent film. Fig. 1 is a conceptual sectional view showing an example of the inner structure of the jetting head.

As shown in Fig. 1, a jetting head 200 is equipped with a nozzle plate 11 that has ejection ports (nozzles), and an ink supply unit 20 that is provided on the opposite side of the nozzle plate from the discharge direction. The nozzle plate 11 is provided with plural ejection ports 12 that eject ink.

The ink supply unit 20 is equipped with plural pressure chambers 21, each of which communicates with each of the plural ejection ports 12 of the nozzle plate 11 through the nozzle communication path 22, plural ink supply channels 23 that supply ink to each of the plural pressure chambers 21, and a common liquid chamber 25 that supply ink to the plural ink supply channels 23, and a pressure generation unit 30 that transforms each of the plural pressure chambers 21.

The ink supply channel 23 is formed between the nozzle plate 11 and the pressure generation unit 30, and the ink that has been supplied to the common liquid chamber 25 is introduced to the ink supply channel 23. To this ink supply channel 23, an end of a supply adjusting path 24 that is connected with the pressure chamber 21 is connected, so that ink can be introduced to the pressure chamber 21 while reducing the amount of the ink that is supplied from the ink supply channel 23 to a required amount. Plural supply adjusting paths 24 are provided at the ink supply channels 23. Ink is supplied to the pressure chamber 21, that is provided adjacent to the pressure generation unit 30, through the ink supply channel 23.

Thus, it is possible to supply a large amount of ink to plural ejection ports.

The pressure generation unit 30 has a configuration in which a vibration plate 31, an adhesion layer 32, a lower electrode 33, a piezoelectric body layer 34, and an upper electrode 35 are laminated in this order from the pressure chamber 21 side. Further, the pressure generation unit 30 is connected with an electric wire that supplies drive signals from the outside. When the piezoelectric element is transformed according to image signals, ink is discharged from the nozzle 12 through the nozzle communication path 22.

Furthermore, in the neighborhood of the ejection port 12, a circulation restrictor 41 is provided, so that the ink is constantly recovered to a circuit 42.

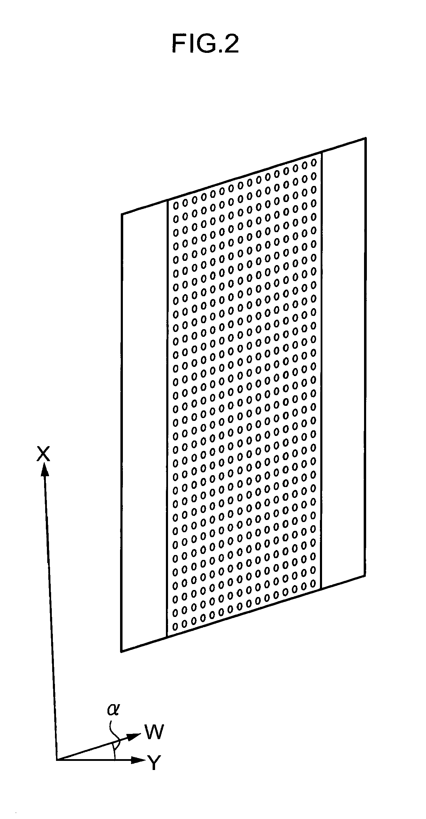

The nozzle plate 11 has 32 × 64 ejection ports (nozzles) arranged two-dimensionally, as shown in Fig. 2. By the use of this nozzle plate 11, it is possible to conduct high image quality recording at high precision of 1200 dpi (dots per inch) with a high speed single pass (in which the recording medium passes through once). Namely, the plural nozzles in the nozzle plate 11 are arranged two-dimensionally in a matrix, and the ink supply unit fixed to this nozzle plate 11 has a flow channel configuration that can discharge (so-called discharge in high duty) a large amount of ink with high frequency.

A part or the whole of this nozzle plate 11 is formed of silicon which is easy to utilize a semiconductor process, in order to realize high precision. The inside of nozzle openings and the surface on the ink discharge direction side of the nozzle plate 11 may have a structure in which silicon is exposed. Specifically, in a case in which a part or the whole of the nozzle plate 11 is formed of silicon, for example, single crystal silicon or polysilicon may be used as the silicon.

### - Liquid repellent film -

The nozzle plate 11 has a constitution in which a liquid repellent film that is formed by using fluoroalkylsilane is provided on its surface, as a film (hereinafter, referred to as a "fluorocarbon film") containing fluorocarbon, which is a fluorine-containing compound.

As the liquid repellent film, for example, a film formed by using a silane coupling compound represented by the following Formula (F) is preferable.

Formula (F) CₙF₂ₙ₊₁-CₘH₂ₘ-Si-X₃

In Formula (F), n represent an integer of 1 or more, and m represents 0 or an integer of 1 or more. X represents an alkoxy group, an amino group, or a halogen atom. A portion of X may be substituted by an alkyl group.

In Formula (F) above, from the viewpoints of liquid repellency and durability of the liquid repellent film, the case in which n is an integer of from 1 to 14, m is 0 or an integer of from 1 to 5, and X is an alkoxy group or a halogen atom is preferable, and further, the case in which n is an integer of from 1 to 12, m is 0 or an integer of from 1 to 3, and X is an alkoxy group or a halogen atom is preferable.

Specific examples of the fluoroalkylsilane may include fluoroalkyl trichlorosilane such as C₈F₁₇C₂H₄SiCl₃ or CF₃(CF₂)₈C₂H₄SiCl₃, and fluoroalkyl alkoxysilane such as CF₃(CF₂)₈C₂H₄Si(OCH₃)₃, 3,3,3-trifluoropropyl trimethoxysilane, tridecafluoro-1,1,2,2-tetrahydrooctyl trimethoxysilane, or heptadecafluoro-1,1,2,2-tetrahydrodecyl trimethoxysilane.

The fluorocarbon film can be formed by, for example, coating with a fluororesin, a chemical vapor deposition method, eutectoid plating with a fluorine-containing polymer or the like, or a liquid repellent treatment method such as a fluorosilane treatment, an aminosilane treatment, or a plasma polymerized fluorocarbon film.

A method forming the liquid repellent film of the fluoroalkylsilane includes the following methods.

As a first example, there is a method where a monomolecular film or a polymer film having a water repellent property is formed by reacting fluoroalkyl trichlorosilane of CF₃(CF₂)₈C₂H₄SiCl₃, or the like with base material (See Japanese Patent Application Nos. 2500816, 2525536). In the chemical formula, CF₃(CF₂)₈C₂H₄- represents a fluoroalkyl group, and -SiCl₃ represents a trichlorosilyl group. In this method, the base material where an active hydrogen is present on the surface is exposed to a solution in which a fluoroalkyl trichlorosilane is dissolved, and chlorosilyl group (-SiCl) is reacted with active hydrogen to form a Si-O bond with the base material. As a result, a fluoroalkyl chain is fixed to the base material through Si-O bond. Herein, the fluoroalkyl chain provides the water repellent property to the film. The water repellent film is a monomolecular film or a polymer film according to the forming conditions of the film.

As a second example, there is a method where a porous base material which impregnates a compound containing a fluoroalkyl chain such as fluoroalkyl alkoxysilane including CF₃(CF₂)₈C₂H₄Si(OCH₃)₃ or the like is heated under vacuum, and the compound is evaporated to provide a water repellent property in the surface of the base material (see JP-A NO. 6-143586). In this method, there is proposed a method in which an intermediate layer of silicon dioxide, or the like is provided in order to increase adhesiveness between a water repellent film and the base material.

As a third example, there is a method in which fluoroalkyl silane is formed by chemical vapor deposition on the surface of the base material by using a compound such as fluoroalkyl trichlorosilane such as CF₃(CF₂)₈C₂H₄SiCl₃, or the like (see JP-A No. 2000-282240).

As a fourth example, there is a method in which oxide fine particles such as zirconia and alumina are formed on the surface of the base material, and then fluoroalkyl chlorosilane or fluoroalkyl alkoxysilane, or the like is coated thereon (see JP-A No. 6-171094).

As a fifth example, there is a method in which a mixed solution which adds metal alkoxide to fluoroalkyl alkoxy silane is hydrolyzed, dehydrated and polymerized, and then this solution is coated and fired on the base material, to thereby form a water repellent film in which molecules having a fluoroalkyl chain in the metal oxide are mixed (See Japanese Patent Application Nos. 2687060, 2874391, 2729714, 2555797). In this method, the fluoroalkyl chain provides the film with a water repellent property, and the metal oxide provides the film with high mechanical strength.

Among these forming methods above, chemical vapor deposition included as the third example is preferable.

In the case of the chemical vapor deposition, a container into which fluorocarbon material such as fluoroalkyl silane has been put and a silicone substrate are put in an airtight container made from Teflon (Trademark) and the like, the whole airtight container is placed in an electrical furnace and fluoroalkyl silane is evaporated by raising the temperature, and thereby a molecule such as fluoroalkylsilane is deposited on the surface of the silicon substrate, and thereby chemical vapor deposition can be performed. Thus, by chemical vapor deposition, for example a monomolecular film of fluorinated alkyl silane can be formed on the nozzle plate. In this case, the deposited surface of silicon substrate is preferably hydrophilized. Specifically, for example the surface of the silicon substrate is washed by using ultraviolet light (wavelength 172 nm), and thereby organic impurities are removed to obtain a clean surface. At this time, the silicon surface is spontaneously oxidized to coat the surface with SiO₂ film, and therefore water vapor in the air is adsorbed directly on the surface, and the surface is coated with an OH group to become a hydrophilic surface.

Another embodiment of the chemical vapor deposition method includes the method described below.

The liquid repellent film formed of fluorinated alkyl silane, for example fluoroalkyl trichloro silane such as CF₃(CF₂)₈C₂H₄SiCl₃ and water vapor at low pressure is introduced into a CVD reactor and thereby can be deposited on the uncoated outer surface of the base. The partial pressure of fluoroalkyl trichlorosilane such as CF₃(CF₂)₈C₂H₄SiCl₃ can be set to between 0.05 torr to 1 torr (6.67 Pa to 133.3 Pa) (for example, 0.1 torr to 0.5 torr (13.3 Pa to 66.5 Pa)), and the partial pressure of H₂O can be set to between 0.05 torr to 20 torr (for example, 0.1 torr to 2 torr). The deposition temperature can be set to between room temperature and 100°C. A coating process can be performed using, for example, a Molecular Vapor Deposition (MVD) TM machine from Applied Micro Structures, Inc.

The thickness of liquid repellent film is not particularly limited, but is preferable in the range of from 0.2 nm to 30 nm, and is more preferable in the range of from 0.4 nm to 20 nm. The thickness of liquid repellent film has no particular problems in the range exceeding 30 nm, but when the thickness is 30 nm or less, it is advantageous from the viewpoint of uniformity of the film. When the thickness is 0.2 nm or more, the water repellent property with regard to ink is good.

The nozzle plate 11 can be formed of a film which contains at least one kind selected from the group consisting of metal (including silicon) oxide and nitride, and metal (excluding silicon). Specifically, when a part or the whole of the nozzle plate 11 is formed of silicon, for example, single crystal silicon and polysilicon. Further, when a part or the whole of the nozzle plate is formed of silicon, for example, there may be provided a film such as a metal oxide, for example silicon oxide, titanium oxide, chromium oxide, or the like or metal nitride such as titanium nitride, silicon nitride, or the like, or metal such as zirconium, on the single crystal silicon substrate. The silicon oxide may be, for example, SiO₂ film formed by oxidizing the whole or a part of the silicon surface of the nozzle plate formed of silicon. A film such as tantalum oxide (preferably, such as tantalum pentoxide (Ta₂O₅)) or zirconium, chromium, titanium, glass, or the like may be formed on a part or the entirety of the silicon surface. Further, a part of the silicon may be constituted to be replaced with glass (for example, borosilicate glass, photosensitive glass, quartz glass, soda-lime glass). A film consisting of tantalum pentoxide, or the like as well as tantalum oxide has excellent ink resistance; in particular good erosion resistance with respect to alkaline ink is obtained.

With regard to the specific embodiments of the method of forming the SiO₂ film, embodiments described in paragraph [0041] of JP-A No. 2011-62999 can be applied.

Further, examples of the configuration of a jetting head equipped with the nozzle plate 11 having plural ejection ports (nozzles) arranged two-dimensionally may include those described in paragraphs [0042] to [0066] of JP-ANo. 2011-62999.

The amount of ink per one drop jetted from an ejection port is preferably from 1 pL (pico liter) to 10 pL, and more preferably from 1.5 pL to 6 pL, from the viewpoint of obtaining a high-precision image. It is also effective to jet liquid droplets of different quantities in combination, with a view to suppressing unevenness in an image and improving smoothness in continuous gradation. The present invention is effective also in such an embodiment.

### - Treatment Liquid Applying Step -

The treatment liquid applying step performs imaging by applying a treatment liquid containing a coagulant component which coagulates components in the ink composition, to a recording medium, and placing the treatment liquid in contact with an ink composition. In this case, dispersed particles such as pigments and the like in the ink composition aggregate, and an image is fixed to the recording medium. While the treatment liquid contains at least one coagulant component, the details and preferred embodiments of the respective components in the treatment liquid are as described previously.

Application of the treatment liquid may be performed by applying known methods such as a coating method, an inkjet method, and an immersion method. The coating method may be performed by a known coating method using a bar coater, an extrusion die coater, an air doctor coater, a blade coater, a rod coater, a knife coater, a squeeze coater, or a reverse roll coater. Details of the inkjet method are as described above.

The treatment liquid applying step may be provided before or after the ink applying step using the ink composition.

In the invention, an embodiment in which the ink applying step is provided after the treatment liquid is applied in a treatment liquid applying step, is preferable. Specifically, an embodiment in which, before applying the ink composition onto the recording medium, a treatment liquid for coagulating pigments and/or a self dispersing polymer in the ink composition is applied in advance, and the ink composition is applied so as to contact the treatment liquid applied on the recording medium to form an image, is preferable. Thereby, image recording speed may be increased and, even when high speed recording is performed, an image having high density, and high resolution is obtained.

The amount of the treatment liquid to be applied is not particularly limited as long as the ink composition can be coagulated, and is preferably 0.1 g/m² or more in terms of the amount of applied coagulant component. The amount of the applied coagulant component is more preferably from 0.2 g/m² to 0.7 g/m². When the amount of the applied coagulant component is 0.1 g/m² or more, superior high-speed coagulation properties that accord with various modes of the use of the inkjet composition are maintained. An application amount of a coagulant component of 0.7 g/m² or less is preferable in that disadvantageous influences, such as change in gloss, are not given to the surface properties of the recording medium to which the treatment liquid is applied.

According to exemplary embodiments of the invention, it is preferable to provide an ink discharging step after the treatment liquid applying step, and to further provide a heating drying step of heating and drying the treatment liquid on the recording medium, between the time after applying the treatment liquid onto the recording medium, and the time until the ink composition is applied. By heating and drying the treatment liquid previously before the ink discharging step, ink coloring properties such as the prevention of bleeding becomes good, and visible images having good color density and hue can be recorded.

The heating and drying can be carried out by a known heating means such as heater, an air blowing means utilizing air blowing such as dryer, or a means combining these. Examples of the heating method include a method of supplying heat by a heater or the like, from the surface of the recording medium opposite the surface applied with the treatment liquid, a method of blowing a warm air or hot air to the surface of the recording medium applied with the treatment liquid, a method of heating using an infrared heater, or the like. Heating can also be performed by combining these methods.

### - Actinic energy ray irradiating step -

In a case in which the ink composition further includes the above-described water soluble polymerizable compound and the polymerization initiator, it is preferable that the image forming method of the present invention further includes an actinic energy irradiating step for initiating the polymerization of the water soluble polymerizable compound, to cure the liquid droplets.

Namely, it is preferable that the image forming method of the present invention includes a step of irradiating the ink composition (ink droplets) applied onto a recording medium with an actinic energy ray. When the ink composition is irradiated with an actinic energy ray, the polymerizable compound included in the ink composition is polymerized and thus, a cured film containing a cross-linked polymer-coated pigment is formed. As a result, abrasion resistance and blocking resistance of the image are improved.

The ink composition that is applied onto a recording medium is cured by irradiating an actinic energy ray thereto. This is because the initiator contained in the ink composition in the present invention is decomposed by actinic energy ray irradiation and generates initiation species such as radicals, acids, or bases; and the initiation species initiate and promote the polymerization reaction of the polymerizable compound so as to cure the ink composition.

In addition to that, when the actinic energy ray is irradiated, the ink composition is further aggregated (fixed) by an action of an acid that is supplied from an acid generating agent contained in the treatment liquid, whereby image qualities (including abrasion resistance and blocking resistance) are improved.

Examples of the actinic energy ray used herein include: α rays; γ rays; electron beams; X-rays; ultraviolet rays; visible light; and infrared rays. The wavelength of the actinic energy ray is preferably from 200 nm to 600 nm, more preferably from 300 nm to 450 nm, and even more preferably from 350 nm to 420 nm, for example.

The power of the actinic energy ray is preferably 5,000 mJ/cm² or less, more preferably from 10 mJ/cm² to 4,000 mJ/cm², and even more preferably from 20 mJ/cm² to 3,000 mJ/cm².

As a source of the actinic energy ray, mainly a mercury lamp or a gas or solid-state laser is used. As a light source that is used to cure a UV-curable inkjet recording ink, a mercury lamp and a metal halide lamp are widely known. However, from the viewpoint of preserving environment, a device free from mercury is strongly demanded at present. Replacement to a GaN-based semiconductor UV light emitting device is quite advantageous industrially or environmentally. Further, an LED (UV-LDE) or an LD (UV-LD) is small in size and low-cost, having long operating life and high efficiency. They are expected to be a light source for an inkjet method of photo-cure type.

In addition, a light emitting diode (LED) or a laser diode (LD) may be also used as an actinic radiation ray (energy ray) source. In particular, when a UV light source is required, a UV-LED or a UV-LD may be used. For instance, a purple color LED with a main emission spectrum having wavelengths between 356 nm and 420 nm is available in the market from Nichia Corp.

A particularly preferable actinic energy ray source in the present invention is a UV-LED and most preferably a UV-LED having a peak wavelength between 350 nm and 430 nm.

### Recording Medium

According to the inkjet recording method of the present invention, an image is recorded on a recording medium.

The recording medium is not particularly limited, and may be a cellulose-based general printing paper, such as high-quality paper, coat paper, or art paper, which is used for general offset printing and the like. When image recording is performed on the cellulose-based general printing paper by a general inkjet method using an aqueous ink, absorption and drying of the ink is relatively slow, colorant migration easily occurs after ink spotting, and image quality tends to lower. In contrast, according to the inkjet recording method of the present invention, a high-quality image recording having excellent color density and hue is achieved while suppressing the migration of the colorant.

As the recording medium, a recording medium which is generally commercially available may be used, and examples include high quality paper such as OK Prince High Quality (trade name, manufactured by Oji Paper Co., Ltd. ), Shiraoi (trade name, manufactured by Nippon Paper Industries Co., Ltd. ), and New NP High Quality (trade name, manufactured by Nippon Paper Industries Co., Ltd. ), fine coated paper such as OK Ever Lite Coat (trade name, manufactured by Oji Paper Co., Ltd.) and Aurora S (trade name, Nippon Paper Industries Co., Ltd. ), light coated paper (A3) such as OK Coat L (trade name, manufactured by Oji Paper Co., Ltd.) and Aurora L (trade name, manufactured by Nippon Paper Industries Co., Ltd. ), coated paper (A2, B2) such as OK Top Coat +(trade name, manufactured by Oji Paper Co., Ltd.) and Aurora Coat (trade name, manufactured by Nippon Paper Industries Co., Ltd. ), and an art paper (A1) such as OK Kanefuji +(trade name, manufactured by Oji Paper Co., Ltd.) and Tokubishi Art (trade name, manufactured by Nippon Paper Industries Co., Ltd.). Further, various papers for photography for use in image forming methods may be used.

Among the recording media, a so-called coated paper used in general offset printing is preferred. The coated paper is a product obtained by coating with a coating material the surface of a paper such as a high quality paper or neutral paper which is mainly based on cellulose and is not surface treated. The coated paper is likely to cause problems in product quality such as the gloss or abrasion resistance of images, in the conventional image formation by aqueous inkjet recording, but in the image forming method in exemplary embodiments of the invention, gloss irregularity is suppressed, and images having good glossiness and abrasion resistance are obtained. Particularly, it is preferable to use a coated paper having a base paper and a coating layer containing inorganic pigments, and more preferable to use a coated paper having a base paper and a coating layer containing kaolin and/or calcium bicarbonate. More specifically, art paper, coated paper, lightweight coated paper or finely coated paper is more preferred.

### Inkjet recording apparatus

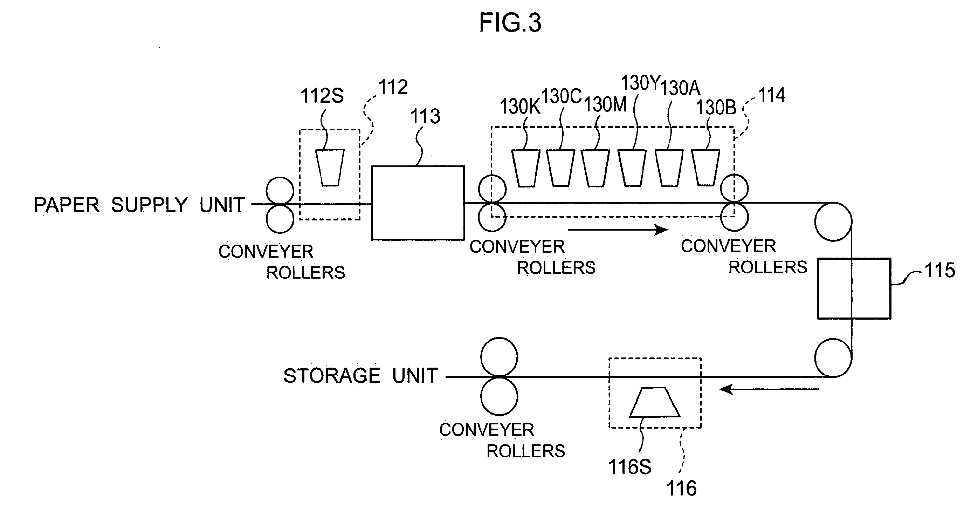

Next, an example of an inkjet recording apparatus favorably used for the inkjet method in the image recording method in the present invention will be explained in detail with reference to Fig. 3. Fig. 3 is a schematic view showing an example of a structure of the entire inkjet recording apparatus.

As shown in Fig. 3, the inkjet recording apparatus includes: treatment liquid application unit 112, having treatment liquid jetting head 112S that jets the treatment liquid; treatment liquid drying zone 113, having heating unit (not shown) that dries the applied treatment liquid; and ink jetting unit 114 that jets various ink compositions; and ink drying zone 115 at which the jetted ink composition is dried, in this order in the conveyance direction of the recording medium (the direction of the arrow shown in the figure). Further, UV ray irradiation unit 116, having UV ray irradiation lamp 116S, is provided downstream of ink drying zone 115 in the conveyance direction of the recording medium.

The recording medium that has been supplied to the inkjet recording apparatus is conveyed by conveyance rollers (conveyer rollers) from a feed section (paper supply unit) to treatment liquid application unit 112, then to treatment liquid drying zone 113, then to ink jetting unit 114, then to ink drying zone 115, and then to UV ray irradiation unit 116, and then accumulated in an accumulation section (storage unit). The feed section feeds sheets of the recording medium from a case in which the sheets are loaded. The conveyance of the recording medium may be conducted by a method other than the method using conveyance rollers, and examples thereof include a drum conveyance method using a drum-shaped member, a belt conveyance method, or a stage conveyance method using a stage.

Among the plural conveyance rollers provided in the inkjet recording apparatus, at least one roller may be a drive roller to which the force generated by a motor (not shown) is transmitted. By rotating the drive roller at a constant rate using the motor, the recording medium is conveyed in a predetermined direction at a predetermined conveyance amount.

Treatment liquid application unit 112 has treatment liquid jetting head 112S, which is connected to a storage tank in which the treatment liquid is stored. Treatment liquid jetting head 112S jets the treatment liquid from jetting nozzles disposed to face the recording surface of the recording medium so that droplets of the treatment liquid can be applied onto the recording medium. The method used in treatment liquid application unit 112 is not limited to a method of jetting from a plate-shaped head, and may be a method of jetting from a head in the form of a conventional nozzle or a coating method using a coating roller. According to the coating method, the treatment liquid may be readily applied to almost the entire one surface of the recording medium, including an image portion on which ink droplets are to be spotted by ink jetting unit 114 provided at the downstream side. In order to make uniform the thickness of the treatment liquid applied onto the recording medium, an air-knife may be used, or a method of providing a member having an acute angle to give a gap between the member and the recording medium that corresponds to the predetermined amount of treatment liquid.

Treatment liquid drying zone 113 is positioned downstream of treatment liquid application unit 112 in the conveyance direction of the recording medium. Treatment liquid drying zone 113 may include: a known heating means such as a heater; an air blower such as a drier; or a combination thereof. The heating may be conducted by a method of disposing a heat-generating member, such as a heater, at a side of the recording medium opposite to the surface applied with treatment liquid wherein, if the recording medium is conveyed automatically, the heat-generating member may be positioned, for example, below the conveyance system that conveys the recording medium placed thereon; or by a method of blowing warm or hot air onto the surface of the recording medium applied with treatment liquid; or by a method of using an infrared heater. Any of these methods may be used singly, or in combination of two or more thereof.

Since the surface temperature of the recording medium may vary depending on the type (material, thickness and the like) of the recording medium and the environmental temperature, it is preferable to form the treatment liquid layer while regulating the surface temperature by using a system including a measurement section that measures the surface temperature of the recording medium and a control section that provides the heating control unit with feedback on the temperature measured by the measurement section. The measurement section for measuring the surface temperature of the recording medium is preferably a contact-type or non-contact type thermometer.

The solvent may be removed using, for example, a solvent-removing roller. Alternatively, a method in which excess solvent is removed from the recording medium by an air knife is also applicable.

Ink jetting unit 114 is positioned downstream of treatment liquid drying zone 113 with respect to the conveyance direction of the recording medium. Ink jetting unit 114 includes recording heads (ink jetting heads) 130K, 130C, 130M and 130Y, which are connected to ink reservoirs that store inks of black (K), cyan (C), magenta (M) and yellow (Y), respectively. Each ink reservoir (not shown) stores an ink composition containing a pigment of a corresponding color, resin particles, water soluble organic solvent and water, and supplies the ink to the corresponding head among ink jetting heads 130K, 130C, 130M and 130Y, as necessary, when image recording is performed. Further, as shown in Fig. 3, recording heads 130A and 130B for jetting inks of specific colors may be further provided, which are positioned downstream of ink jetting heads 130K, 130C, 130M and 130Y with respect to the conveyance direction of the recording medium, such that recording heads 30A and 30B jet the inks having specific colors as necessary

Ink jetting heads 130K, 130C, 130M and 130Y jet inks in a manner corresponding to the image to be formed, through jetting nozzles that are positioned so as to face the recording surface of the recording medium. In this way, inks of the respective colors are applied to the recording surface of the recording medium to form a color image.

The treatment liquid jetting head 112S, and the ink jetting heads 130K, 130C, 130M, 130Y, 130A, and 130B are each equipped with a nozzle plate which has a number of ejection ports (nozzles) arranged on the plate, such that 32 × 64 ejection ports (nozzles) are arranged two-dimensionally, as shown in Fig. 2. Further, the nozzle plate has, on its surface, a liquid repellent film formed by means of a fluorine-containing compound.

Since the ink composition of the present invention has a divalent metal ion content of 200 ppm or less, deterioration of the liquid repellent film provided on the nozzle plate can be suppressed.

In the figure, treatment liquid jetting head 112S and ink jetting heads 130K, 130C, 130M, 130Y, 130A and 130B have the same structure.

The application amount of the treatment liquid and the application amount of the ink composition are preferably regulated in accordance with the necessity. For example, the amount of the treatment liquid may be changed according to the type of the recording medium, in order to, for example, adjust the properties such as viscoelasticity of the aggregates formed upon mixing of the treatment liquid and the ink composition.

Ink drying zone 115 is positioned downstream of ink jetting unit 114 in the conveyance direction of the recording medium. Ink drying zone 115 may have a structure similar to that of treatment liquid drying zone 113.

UV ray irradiation unit 116 is disposed further downstream of ink drying zone 115 in the conveyance direction of the recording medium, and emits UV rays from UV ray irradiation lamp 116S provided in UV ray irradiation unit 116, thereby curing through polymerization of the monomer components contained in an image after drying of the image. UV ray irradiation lamp 116S is a lamp which is disposed to oppose the recording surface of the recording medium, and with which the entire recording surface is irradiated to cure the entire image. The lamp used in UV ray irradiation unit 116 is not limited to UV ray irradiation lamp 116S, and it is also possible to use a halogen lamp, a high-pressure mercury lamp, a laser, a LED, an electron-beam irradiation device, or the like.

The UV ray irradiation unit 116 may be disposed before or after the ink drying zone 115.

The inkjet recording apparatus may further include a heating unit at the conveyance path from the feed section to the accumulation section, in order to conduct a heat treatment on the recording medium. For example, by providing a heating unit at a desired position, such as upstream of treatment liquid drying zone 113 or between ink jetting unit 114 and ink drying zone 115, the temperature of the recording medium can be increased to a desired temperature, at which drying and fixing is performed effectively. This application claims priority from Japanese Patent Application No. 2012-066136 filed on March 22, 2012, the disclosure of which is incorporated by reference herein.

### EXAMPLES

Hereinafter, the present invention will be specifically described with reference to Examples, but the present invention is not limited to these Examples, as long as not to be exceeded the gist of the present invention. Unless stated otherwise, the "parts" and "%" are based on mass.

### Synthesis Examples

### Synthesis of Polymer P-1

Synthesis of a polymer P-1 was performed as follows.

A composition of supplying monomers was prepared by mixing methacrylic acid (236 parts), methyl methacrylate (414 parts), 2-ethylhexyl methacrylate (350 parts), and isopropanol (1051 parts). A composition of supplying initiators was prepared by mixing 2,2-azobis(2-methyl butyronitrile) (22.05 parts) and isopropanol (116 parts).

Into isopropanol (167 parts) heated at 80°C in a nitrogen atmosphere, a mixture of the composition of supplying monomers and the composition of supplying initiators was dropped over 2 hours. After dropping, the resulting reaction mixture was kept at 80°C for 4 hours, and then cooled to 25°C. The solvent was removed under vacuum, so that a polymer P-1 with a weight average molecular weight of 80,000 and an acid value of 132.08 mgKOH/g was obtained.

The other polymers used in Examples and Comparative Examples may be synthesized in a substantially similar manner.

### Preparation of Pigment Dispersion including Pigment covered with Cross-linked Polymer

The above obtained polymer P-1 in an amount of 150 parts was dissolved in water and neutralized at pH 9 with a potassium hydroxide aqueous solution, so that an aqueous solution dissolving about 25% of the polymer was prepared.

To 180 parts of the resulting aqueous solution of the polymer, 90 parts of Pigment Blue 15:3 ("PHTHALOCYANINE BLUE A220" (trade name) manufactured by Dainichiseika Color & Chemicals Mfg. Co., Ltd.) and 330 parts of water were admixed. The resulting mixture was dispersed with a beads mill (0.1 mm of bead diameter, zirconia beads) for 4 hours to obtain a dispersion N (non-cross-linked dispersion) of the pigment covered with a non-cross-linked polymer with a pigment concentration of 15%.

To 136 parts of the above non-cross-linked dispersion N, 0.23 part of polyethylene glycol diglycidyl ether (Aldrich Catalogue No. 47,569-6) was added. The resulting mixture was reacted at 50°C for 6.5 hours and then cooled to 25°C, so that a dispersion 1 (cross-linked dispersion) of the pigment of which the surface is covered with cross-linked polymer with a pigment concentration of 15% was obtained.

### Example 1

### Preparation of Ink Set 1

An ink set 1 with a combination of the following ink composition A1 and treatment liquid B 1 was prepared.

### Preparation of Ink Composition A1

Including the dispersion of the cross-linked pigment-containing resin particles obtained above, the components described in the following prescription were mixed and passed through a 5 µm membrane filter to prepare an ink composition A1.

### Prescription of Ink Composition A1

| | |
|---|---|
| · Dispersion 1 of the above pigment covered with the cross-linked polymer (solid content of pigments: 15%): | 26.8 parts, |
| · Nonionic compound 2 (polymerizable compound): | 19 parts, |
| · "OLFIN E1010" (trade name; manufactured by Nisshin Chemical Industry Co., Ltd., surfactant): | 1 part, |
| · "IRGACURE 2959" (trade name; manufactured by Ciba Japan Co., Ltd., photo-polymerization initiator): | 2.9 part, |
| · MgCl₂ (5% aqueous solution): | 0.2 parts, |
| · CaCl₂ (5% aqueous solution): | 0.06 parts, and |
| · Ion exchanged water: remaining amount that provides a total amount of 100 parts. | |

With regard to the ink composition A1, the separation rate was measured and, as a result, a peak derived from the non-cross-linked polymer P-1 was detected and thus, it was confirmed that the non-cross-linked polymer P-1 was contained in the ink composition A1. Also with regard to the ink compositions prepared in Examples 2 to 7 and Comparative Examples 1 to 3, which are described below, the same measurement was performed, and it was confirmed that the non-cross-linked polymer was present.

### <Method of Measuring Separation Rate>

2 mL of the ink sample was subjected to centrifugation at 100,000 rpm for 30 minutes using an ultracentrifuge (trade name: CS-GXII, manufactured by Hitachi Koki Co., Ltd.; a table-top ultracentrifuge), and then the supernatant was gathered. The gathered supernatant was heated and dried in a vacuum oven at 120°C for 3 hours, and the mass of the resulting substance was measured, to determine the amount of solid matter [g]. From this amount of solid matter, the separation rate was calculated.

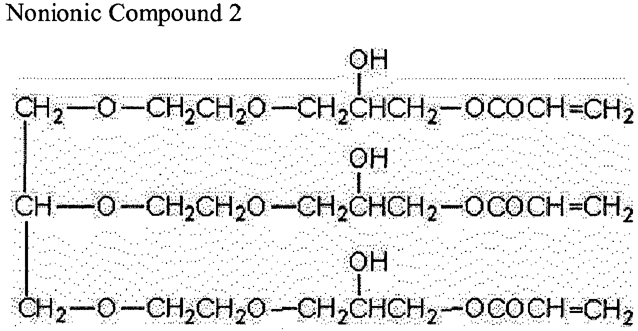

### (Preparation of Treatment liquid B1)

The components of the following composition were mixed to prepare Treatment liquid B1. The viscosity, surface tension and pH (25°C ± 1°C) of Treatment liquid B1 were 2.5 mPa·s, 40 mN/m, and 1.0, respectively.

### - Composition of Treatment liquid B1 -

| | |
|---|---|
| · Malonic acid (manufactured by Wako Pure Chemical Industries Ltd.) | 25% |
| · Diethylene glycol monomethyl ether (manufactured by Wako Pure Chemical Industries Ltd.) | 20.0% |
| · EMULGEN P109 (trade name, manufactured by Kao Corporation, nonionic surfactant) | 1.0% |
| · Ion-exchanged water | quantity up to 100%. |

### [Examples 2 to 7, Comparative Examples 1 to 3]

Ink sets of Examples 2 to 7 and Comparative Examples 1 to 3 were each independently prepared in a manner substantially similar to that in Example 1 except that the polymer P-1 was respectively replaced with polymer p-2 to polymer P-10 described below in preparation of ink compositions and an added amount of the compound containing the divalent metal ion used in the preparation of the ink composition A1 in Example 1 was respectively changed, as listed in Table 1 below.

**TABLE 1**

| | Compound containing Metal ion [parts] | |
|---|---|---|
| | MgCl₂ | CaCl₂ |
| Example 1 | 0.2 | 0.06 |
| Example 2 | 0.01 | 0.14 |
| Example 3 | 0.1 | 0.07 |
| Example 4 | 0.14 | 0.07 |
| Example 5 | 0.12 | 0.24 |
| Example 6 | 0.02 | 0.04 |
| Example 7 | 0.04 | 0.04 |
| Comparative Example 1 | 0.3 | 0.16 |
| Comparative Example 2 | 0.02 | 0.01 |
| Comparative Example 3 | 0.03 | 0.03 |

### (Synthesis of Polymer P-2)

Polymer P-2 having an acid value as listed in Table 2 was prepared in a manner substantially the same as that in the preparation of polymer P-1 except that an amount of methacrylic acid was changed from 202 parts to 216 parts and an amount of methyl methacrylate was changed from 448 parts to 434 parts respectively. A weight average molecular weight of the obtained polymer P-2 was measured as 78,000.

### (Synthesis of Polymer P-3)

Polymer P-3 having an acid value as listed in Table 2 was prepared in a manner substantially the same as that in the preparation of polymer P-2 except that an amount of methacrylic acid was changed from 216 parts to 169 parts and an amount of methyl methacrylate was changed from 434 parts to 481 parts respectively. A weight average molecular weight of the obtained polymer P-3 was measured as 60,000.

### (Synthesis of Polymer P-4)

Polymer P-4 having an acid value as listed in Table 2 was prepared in a manner substantially the same as that in the preparation of polymer P-3 except that an amount of methacrylic acid was changed from 169 parts to 189 parts and an amount of methyl methacrylate was changed from 481 parts to 461 parts respectively. A weight average molecular weight of the obtained polymer P-4 was measured as 80,000.

### (Synthesis of Polymer P-5)

Polymer P-5 having an acid value as listed in Table 2 was prepared in a manner substantially the same as that in the preparation of polymer P-3 except that an amount of methacrylic acid was changed from 189 parts to 175 parts and an amount of methyl methacrylate was changed from 461 parts to 475 parts respectively. A weight average molecular weight of the obtained polymer P-5 was measured as 60,000.

### (Synthesis of Polymer P-6)

Polymer P-6 having an acid value as listed in Table 2 was prepared in a manner substantially the same as that in the preparation of polymer P-3 except that an amount of methacrylic acid was changed from 175 parts to 236 parts and an amount of methyl methacrylate was changed from 475 parts to 414 parts respectively. A weight average molecular weight of the obtained polymer P-6 was measured as 75,000.

### (Synthesis of Polymer P-7)

Polymer P-7 having an acid value as listed in Table 2 was prepared in a manner substantially the same as that in the preparation of polymer P-3 except that an amount of methacrylic acid was changed from 236 parts to 162 parts and an amount of methyl methacrylate was changed from 414 parts to 488 parts respectively. A weight average molecular weight of the obtained polymer P-7 was measured as 65,000.

### (Synthesis of Polymer P-8)

Polymer P-8 having an acid value as listed in Table 2 was prepared in a manner substantially the same as that in the preparation of polymer P-3 except that an amount of methacrylic acid was changed from 162 parts to 100 parts and an amount of methyl methacrylate was changed from 488 parts to 550 parts respectively. A weight average molecular weight of the obtained polymer P-8 was measured as 70,000.

### (Synthesis of Polymer P-9)

Polymer P-9 having an acid value as listed in Table 2 was prepared in a manner substantially the same as that in the preparation of polymer P-3 except that an amount of methacrylic acid was changed from 100 parts to 162 parts and an amount of methyl methacrylate was changed from 550 parts to 488 parts respectively. A weight average molecular weight of the obtained polymer P-9 was measured as 50,000.

### (Synthesis of Polymer P-10)

Polymer P-10 having an acid value as listed in Table 2 was prepared in a manner substantially the same as that in the preparation of polymer P-3 except that an amount of methacrylic acid was changed from 162 parts to 110 parts and an amount of methyl methacrylate was changed from 488 parts to 540 parts respectively. A weight average molecular weight of the obtained polymer P-10 was measured as 55,000.

### <Evaluation>

Using the ink sets of the examples and the comparative examples obtained as described above, image formation was carried out according to the following image forming method, and then, evaluations of jetting stability and landing position accuracy (jetting deviation) were performed, based on the evaluation methods described below. Results of the evaluation of jetting stability and the evaluation of landing position accuracy (jetting deviation) are shown in Table 2.

### - Image Forming Method -

First, an inkjet apparatus was prepared which has, as shown in Fig. 3, treatment liquid application unit 112 equipped with treatment liquid jetting head 112S that jets a treatment liquid, treatment liquid drying zone 113 that dries the applied treatment liquid, ink jetting unit 114 that jets various aqueous inks, ink drying zone 115 that dries the applied aqueous ink, and UV ray irradiation unit 116 equipped with UV ray irradiation lamp 116S capable of irradiating UV rays are provided sequentially in the conveyance direction of the recording medium (the direction of the arrow shown in the figure).

Although not shown in the figure, treatment liquid drying zone 113 has an air blower at the recording surface side of the recording medium that supplies dry air so as to dry the treatment liquid, and an infrared heater at the non-recording surface of the recording medium. Treatment liquid drying zone 113 is configured such that at least 70% by mass of the water contained in the treatment liquid is evaporated (dried) off during a period until 900msec has passed after the application of the treatment liquid is started at the treatment liquid application unit, by regulating the temperature and air volume. In ink jetting unit 114, black-ink jetting head 130K, cyan-ink jetting head 130C, magenta-ink jetting head 130M, and yellow-ink jetting head 130Y, which are each independently equipped with a silicone nozzle plate are disposed in this order in the conveyance direction (the direction of the arrow).

The treatment liquid and ink prepared above were charged into storage tanks (not shown in the figure) respectively connected to treatment jetting head 112S and each color ink jetting heads 130C, 130M and 130Y of the inkjet apparatus that was configured as shown in Fig. 3.

The silicon nozzle plate is formed of single crystal silicon, and a silicon oxide film (SiO₂ film) is formed on the surface thereof at a side toward the ink ejection direction of the nozzle by a CVD method by introducing SiCl₄ and water vapor to a chemical vapor deposition (CVD) reactor. The thickness of SiO₂ film is 50 nm. Further, after performing an oxygen plasma process, chemical vapor deposition (CVD) was performed using C₈F₁₇C₂H₄SiCl₃, and the liquid repellent film was formed on SiO₂ film. The liquid repellent film was formed by introducing C₈F₁₇C₂H₄SiCl₃ and water vapor at the low pressure into CVD reactor. The thickness of the liquid repellent film is 10 nm.

Further, plural nozzles as shown in Fig. 2 are arranged two-dimensionally in a matrix form in the silicon nozzle plate, and ink droplets can be ejected with high precision. As a recording medium, TOKUBISHI ART BOTH FACES N (trade name, manufactured by Mitsubishi Paper Mills, Ltd.) was prepared.

The each jetting head was fixed and arranged such that the direction of the line where nozzles were arranged (W direction in Fig. 2) was inclined at an angle of 75.7 degree (90°-α in Fig. 2) with respect to the perpendicular direction (principal scanning direction: X direction in Fig. 2) to the moving direction of the recording medium (sub scanning direction: Y direction in Fig. 2). While moving the recording medium at a constant speed along the sub scanning direction, the ink composition was ejected by a line system under the ejection conditions of an ink droplet amount of 6.0 pL, an ejection frequency of 25.7 kHz, and a resolution of 1200 dpi × 1200 dpi.

In this manner, a 50% solid image with an area of 2 square cm, a 4 to 8 pt image of the character 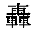 (TODOROKI)", and a 4 pt image of the character 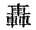 (TODOROKI)" of as a white letter on a solid image were recorded.

When the images were recorded, the treatment liquid was jetted from treatment liquid jetting head 112S onto the recording medium in a single-pass manner, and then the treatment liquid was dried in treatment liquid drying zone 113. Conveyance of the recording medium was controlled so as to pass through the treatment liquid drying zone within 900 m sec after the initiation of the jetting of the treatment liquid. In treatment liquid drying zone 113, while the spotted treatment liquid was heated with an infrared heater from the side (back side) of the recording medium that was opposite to the surface at which the treatment liquid was spotted such that a film surface temperature was maintained at 40 to 45°C, hot air having a temperature of 120°C was blown from a blower to the recording surface, and the air volume was changed to achieve a desired drying amount. Subsequently, the cyan ink was jetted from cyan ink jetting head 130C to record an image. Then, in a manner similar to the above, drying of the ink was performed in ink drying zone 115 by blowing a hot air having a temperature of 120°C and a velocity of 5m/sec from a blower to the recording surface for 15 seconds while heating with an infrared heater from the side (back side) of the recording medium that was opposite to the surface at which the ink was spotted. After the drying of the image, the image was irradiated with UV rays (a metal halide lamp, manufactured by EYE GRAPHICS CO. LTD., a maximum irradiation wave length 365 nm) so as that an integrated irradiance level become 3 J/cm² in UV ray irradiation unit 116, whereby the image was cured.

### - Evaluation of Jetting Stability -

Each ink composition of each ink set obtained was stored at room temperature (at 25°C) for 12 weeks, and then recording was carried out on a sheet made of polyvinyl chloride using an inkjet recording apparatus equipped with a piezo type inkjet nozzle. Continuous printing was carried out at ordinary temperature (at 25°C) for 48 hours, and the presence of dot loss and ink scattering was visually observed. Evaluation was performed according to the following criteria.

### (Evaluation Criteria)

A: Dot loss or ink scattering does not occur, or the number of times of the occurrence is 2 times or less.
B: Dot loss or ink scattering occurs 3 times to 10 times.
C: Dot loss or ink scattering occurs 11 times or more.

### - Evaluation of Landing Position Accuracy (Jetting Deviation) -

Ink droplets were successively ejected from the jetting head at 25.7 kHz for 600 billion times, and then image recording was carried out to draw a line image of 75 dpi × 2400 dpi at an ejection frequency of 25.7 kHz using 96 nozzles. With respect to this line image, the center value of the line was measured using a dot analyzer (trade name: DA-6000, manufactured by Oji Scientific Instruments Co., Ltd.), and a standard deviation σ of misalignment of each line was calculated. The evaluation results are shown in Table 2 below. Note that, the case in which the standard deviation σ of misalignment is less than 2 µm is a normal state, and the standard deviation σ of misalignment of less than 5 µm indicates that it is a level non-problematic in practical use.

### (Evaluation Criteria)

A: σ < 3 µm
B: 3 µm ≤ σ < 5 µm
C: 5 µm ≤ σ < 7 µm
D: 7 µm ≤ σ

Further, the content of divalent metal ion and the content of divalent anion in the ink composition are also shown in Table 2. The content of divalent metal ion and the content of divalent anion in the ink composition were measured according to the following measurement methods, respectively.

### - Measurement of Concentration of Divalent Metal Ion in each Ink Composition -

Each ink composition was subjected to ultracentrifugation (at 140,000 rpm, for 60 min), then the supernatant liquid was gathered, and then the obtained supernatant liquid was diluted 10 times to 1,000 times with ultrapure water, to obtain a sample. The sample thus obtained was measured in accordance with anion chromatography under the following conditions.

### (Measurement Conditions)

Measuring device: "ICS-2000" (trade name, manufactured by Dionex Corporation)
Column: "AS18 4 mm" (trade name, manufactured by Dionex Corporation)
Guard column: "AG18 4 mm" (trade name, manufactured by Dionex Corporation)
Eluent: 5 mmol/L aqueous solution of potassium hydroxide
Flow rate: 1 mL/min
Column temperature: 30°C
Injection amount: 25 µL
Detection: conductivity (suppressor system)

### - Measurement of Concentration of Divalent Anion in each Ink Composition -

Using a sample obtained by extracting 0.03 mL of each ink composition, then adding 3 mL of HNO₃ thereto, and then subjecting the mixture to microwave ashing (at 230°C), a total element survey was carried out using ICP-MS (inductively coupled plasma mass spectrometer) (trade name: HP-4500, manufactured by Agilent Technologies Inc.). With regard to the elements which had a possibility of being present in an amount of several mg/L or more in the sample, quantification was carried out using ICP-OES (trade name: OPTIMA 7300DV, manufactured by PerkinElmer, Inc.).

**TABLE 2**

| | Polymer | | Concentration of Divalent Metal Ion [ppm] | | | Concentration of Divalent Anion [ppm] | | | Jetting Stability | Landing Position Accuracy |
|---|---|---|---|---|---|---|---|---|---|---|
| | Kind | Acid Value [mgKOH/g] | Mg²⁺ | Ca²⁺ | Total | PO₄²⁻ | SO₄²⁻ | Total | | |
| Example 1 | P-1 | 132.08 | 100 | 30 | 130 | 20 | 5 | 25 | A | A |
| Example 2 | P-2 | 140.88 | 5 | 70 | 75 | 2 | 12 | 14 | A | A |
| Example 3 | P-3 | 110.07 | 50 | 10 | 60 | 10 | 20 | 30 | A | A |
| Example 4 | P-4 | 123.27 | 72 | 35 | 107 | 12 | 15 | 27 | B | A |
| Example 5 | P-5 | 114.47 | 60 | 120 | 180 | 8 | 8 | 16 | B | B |
| Example 6 | P-6 | 158.4 | 10 | 22 | 32 | 20 | 6 | 26 | B | B |
| Example 7 | P-7 | 105.66 | 20 | 20 | 40 | 30 | 20 | 50 | B | B |
| Comparative Example 1 | P-8 | 65.2 | 150 | 80 | 230 | 25 | 20 | 45 | C | D |
| Comparative Example 2 | P-9 | 105.66 | 10 | 6 | 16 | 10 | 12 | 22 | C | D |
| Comparative Example 3 | P-10 | 70 | 14 | 14 | 28 | 7 | 15 | 22 | C | D |

As is evident from Table 2, in Example 1 to Example 7 in which the total amount of divalent metal ions in the ink composition was within the range of from 30 ppm to 200 ppm with respect to the total mass of the ink composition, all the jetting stability and the landing position accuracy of ink droplets were excellent.

In Comparative Example 1 (230 ppm) in which the total amount of divalent metal ions exceeds 200 ppm, the liquid repellent film provided on the nozzle plate was deteriorated. It is thought that, due to such deterioration, the ink composition is adhered or stuck to the circumference (at the edge or the like) of the ejection port, which leads to the lowering of landing position accuracy of liquid droplets or the lowering of jetting stability.

## Claims

1. An ink composition comprising:
water;
a cross-linked polymer-coated pigment in which at least a portion of a surface of the pigment is covered with a cross-linked polymer;
free polymer derived from the polymer before cross-linking that is not bound to the cross-linked polymer-coated pigment;
at least one divalent metal ion in an amount of from 30 ppm to 200 ppm with respect to a total mass of the ink composition; and
wherein the free polymer comprises an anionic group and has an acid value of 95 mgKOH/g or more.

2. The ink composition according to claim 1, further comprising a divalent anion in an amount of 40 ppm or less with respect to the total mass of the ink composition.

3. The ink composition according to either claim 1 or 2, wherein the divalent metal ion is Mg²⁺, Ca²⁺, Zn²⁺, or any mixture thereof.

4. The ink composition according to any one of claims 1 to 3, further comprising at least one water soluble polymerizable compound having at least two polymerizable groups.

5. The ink composition according to claim 4, wherein at least one of the at least two polymerizable groups is a group selected from the group consisting of a (meth)acrylamido group, a maleimido group, a vinylsulfono group and an N-vinylamido group.

6. The ink composition according to claim 4 or claim 5, wherein a ratio of the molecular weight of the water soluble polymerizable compound to a number of polymerizable groups contained in the water soluble polymerizable compound (molecular weight of the water soluble polymerizable compound/number of polymerizable groups) is 175 or less.

7. The ink composition according to any one of claims 4 to 6, wherein the water soluble polymerizable compound further comprises at least one nonionic hydrophilic group selected from the group consisting of an oxyalkylene group, an oligomer thereof, and a hydroxyl group.

8. An ink set comprising:
the ink composition according to any one of claims 1 to 7; and
a treatment liquid comprising a coagulant component, which causes aggregation of components contained in the ink composition when the coagulant component contacts the ink composition.

9. An image forming method comprising:
applying the ink composition according to any one of claims 1 to 7 onto a recording medium by an inkjet method.

10. The image forming method according to claim 9, further comprising:
applying, onto a recording medium, a treatment liquid comprising a coagulant component, which causes aggregation of components contained in the ink composition when the coagulant component contacts the ink composition.

11. The image forming method according to claim 10, wherein the coagulant component is an acidic compound.

12. The image forming method according to any one of claims 9 to 11, wherein the ink composition is discharged through an opening provided on a nozzle plate, the nozzle plate comprising a liquid repellent film, and the liquid repellent film comprising a fluorine-containing compound.

13. The image forming method according to claim 12, wherein the fluorine-containing compound is fluoroalkylsilane or fluoroalkyl alkoxysilane.

## Patentansprüche

1. Tintenzusammensetzung, umfassend:
Wasser;
ein mit vernetztem Polymer beschichtetes Pigment, wobei mindestens ein Teil einer Oberfläche des Pigments mit einem vernetzten Polymer bedeckt ist;
freies Polymer, abgeleitet von dem Polymer vor der Vernetzung, das nicht an das mit vernetztem Polymer beschichtete Pigment gebunden ist;
mindestens ein zweiwertiges Metallion in einer Menge von 30 ppm bis 200 ppm, bezogen auf eine Gesamtmasse der Tintenzusammensetzung; und
wobei das freie Polymer eine anionische Gruppe umfasst und eine Säurezahl von 95 mg KOH/g oder mehr aufweist.

2. Tintenzusammensetzung nach Anspruch 1, ferner umfassend ein zweiwertiges Anion in einer Menge von 40 ppm oder weniger, bezogen auf die Gesamtmasse der Tintenzusammensetzung.

3. Tintenzusammensetzung nach Anspruch 1 oder 2, wobei es sich bei dem zweiwertigen Metallion um Mg²⁺, Ca²⁺, Zn²⁺ oder eine Mischung davon handelt.

4. Tintenzusammensetzung nach einem der Ansprüche 1 bis 3, ferner umfassend mindestens eine wasserlösliche polymerisierbare Verbindung mit mindestens zwei polymerisierbaren Gruppen.

5. Tintenzusammensetzung nach Anspruch 4, wobei es sich bei mindestens einer der mindestens zwei polymerisierbaren Gruppen um eine Gruppe aus der Gruppe bestehend aus einer (Meth)acrylamidogruppe, einer Maleinimidogruppe, einer Vinylsulfongruppe und einer N-Vinylamidogruppe handelt.

6. Tintenzusammensetzung nach Anspruch 4 oder Anspruch 5, wobei das Gewichtsverhältnis von wasserlöslicher polymerisierbarer Verbindung zu einer Zahl von polymerisierbaren Gruppen in der wasserlöslichen polymerisierbaren Verbindung (Molekulargewicht der wasserlöslichen polymerisierbaren Verbindung/Zahl von polymerisierbaren Gruppen) 175 oder weniger beträgt.

7. Tintenzusammensetzung nach einem der Ansprüche 4 bis 6, wobei die wasserlösliche polymerisierbare Verbindung ferner mindestens eine nichtionische hydrophile Gruppe, die aus der Gruppe bestehend aus einer Oxyalkylengruppe, einem Oligomer davon und einer Hydroxylgruppe ausgewählt ist, umfasst.

8. Tintenkombination, umfassend:
die Tintenzusammensetzung nach einem der Ansprüche 1 bis 7 und
eine Behandlungsflüssigkeit, die eine Koagulanskomponente umfasst, welche die Aggregation von Komponenten in der Tintenzusammensetzung beim Kontaktieren der Koagulanskomponente mit der Tintenzusammensetzung verursacht.

9. Bilderzeugungsverfahren, bei dem man die Tintenzusammensetzung nach einem der Ansprüche 1 bis 7 nach einem Tintenstrahlverfahren auf ein Aufzeichnungsmedium aufbringt.

10. Bilderzeugungsverfahren nach Anspruch 9, bei dem man ferner
auf ein Aufzeichnungsmedium eine Behandlungsflüssigkeit aufbringt, die eine Koagulanskomponente umfasst, welche die Aggregation von Komponenten in der Tintenzusammensetzung beim Kontaktieren der Koagulanskomponente mit der Tintenzusammensetzung verursacht.

11. Bilderzeugungsverfahren nach Anspruch 10, wobei sich bei der Koagulanskomponente um eine saure Verbindung handelt.

12. Bilderzeugungsverfahren nach einem der Ansprüche 9 bis 11, wobei die Tintenzusammensetzung durch eine auf einer Düsenplatte vorgesehene Öffnung ausgetragen wird, wobei die Düsenplatte einen flüssigkeitsabweisenden Film umfasst und der flüssigkeitsabweisende Film eine fluorhaltige Verbindung umfasst.

13. Bilderzeugungsverfahren nach Anspruch 12, wobei es sich bei der fluorhaltigen Verbindung um Fluoralkylsilan oder Fluoralkylalkoxysilan handelt.

## Revendications

1. Composition d'encre comprenant :
de l'eau ;
un pigment recouvert de polymère réticulé, au moins une partie d'une surface du pigment étant recouverte d'un polymère réticulé ;
un polymère libre dérivé du polymère avant réticulation qui n'est pas lié au pigment recouvert de polymère réticulé ;
au moins un ion métallique divalent dans une quantité de 30 ppm à 200 ppm par rapport à la masse totale de la composition d'encre ; et
dans laquelle le polymère libre comprend un groupe anionique et a un indice d'acide de 95 mg KOH/g ou plus.

2. Composition d'encre selon la revendication 1, comprenant en outre un anion divalent dans une quantité de 40 ppm ou moins par rapport à la masse totale de la composition d'encre.

3. Composition d'encre selon la revendication 1 ou 2, dans laquelle l'ion métallique divalent est Mg²⁺, Ca²⁺, Zn²⁺, ou tout mélange de ceux-ci.

4. Composition d'encre selon l'une quelconque des revendications 1 à 3, comprenant en outre au moins un composé polymérisable hydrosoluble ayant au moins deux groupes polymérisables.

5. Composition d'encre selon la revendication 4, dans laquelle au moins un des au moins deux groupes polymérisables est un groupe choisi dans le groupe constitué par un groupe (méth)acrylamido, un groupe maléimido, un groupe vinylsulfono et un groupe N-vinylamido.

6. Composition d'encre selon la revendication 4 ou la revendication 5, dans laquelle le rapport entre le poids moléculaire du composé polymérisable hydrosoluble et le nombre de groupes polymérisables contenus dans le composé polymérisable hydrosoluble (poids moléculaire du composé polymérisable hydrosoluble/nombre de groupes polymérisables) est de 175 ou moins.

7. Composition d'encre selon l'une quelconque des revendications 4 à 6, dans laquelle le composé polymérisable hydrosoluble comprend en outre au moins un groupe hydrophile non ionique choisi dans le groupe constitué par un groupe oxyalkylène, un oligomère de celui-ci, et un groupe hydroxyle.

8. Jeu d'encre comprenant :
la composition d'encre selon l'une quelconque des revendications 1 à 7 ; et
un liquide de traitement comprenant un composant coagulant, qui provoque l'agrégation de composants contenus dans la composition d'encre quand le composant coagulant entre en contact avec la composition d'encre.

9. Procédé de formation d'images comprenant :
l'application de la composition d'encre selon l'une quelconque des revendications 1 à 7 sur un support d'enregistrement par un procédé de jet d'encre.

10. Procédé de formation d'images selon la revendication 9, comprenant en outre :
l'application, sur un support d'enregistrement, d'un liquide de traitement comprenant un composant coagulant, qui provoque l'agrégation de composants contenus dans la composition d'encre quand le composant coagulant entre en contact avec la composition d'encre.

11. Procédé de formation d'images selon la revendication 10, dans lequel le composant coagulant est un composé acide.

12. Procédé de formation d'images selon l'une quelconque des revendications 9 à 11, dans lequel la composition d'encre est déchargée par une ouverture pratiquée sur une plaque à buse, la plaque à buse comprenant un film repoussant les liquides, et le film repoussant les liquides comprenant un composé contenant du fluor.

13. Procédé de formation d'images selon la revendication 12, dans lequel le composé contenant du fluor est un fluoroalkylsilane ou un fluoroalkylalcoxysilane.
